# EUROPÄISCHE PATENTSCHRIFT

(11) **EP 2 268 934 B1**
(45) Veröffentlichungstag und Bekanntmachung des Hinweises auf die Patenterteilung: **31.10.2012**
(21) Anmeldenummer: 09735894.9
(22) Anmeldetag: 17.04.2009
(51) Int. Cl.: F16D 25/0635, F16D 25/12

(54) **KUPPLUNGSANORDNUNG, INSBESONDERE FÜR DEN ANTRIEBSSTRANG EINES FAHRZEUGS**
CLUTCH ARRANGEMENT, IN PARTICULAR FOR THE DRIVE TRAIN OF A VEHICLE
SYSTEME D'EMBRAYAGE, EN PARTICULIER POUR LA CHAINE CINEMATIQUE D'UN VEHICULE

(30) Priorität: 23.04.2008 DE 102008001327; 04.04.2009 DE 102009016414
(43) Veröffentlichungstag der Anmeldung: 05.01.2011
(73) Patentinhaber: ZF Friedrichshafen AG, 88038 Friedrichshafen (DE)
(72) Erfinder: SUDAU, Jörg, 97464 Niederwerrn (DE); LOTZE, Rüdiger, 97421 Schweinfurt (DE); SCHRÖDER, Arthur, 97456 Hambach (DE); EBERT, Angelika, 97453 Schonungen (DE); KNEUER, Michael, Üchtelhausen 97532 (DE); SUECK, Gregor, 97526 Sennfeld (DE)
(86) Internationale Anmeldenummer: PCT/EP2009/054597
(87) Internationale Veröffentlichungsnummer: WO 2009/130166

(56) Entgegenhaltungen:
- EP-A- 1 610 018
- WO-A-2006/100966
- DE-A1- 10 242 856
- US-A- 3 321 999
- US-A- 6 098 771

## Beschreibung

Die vorliegende Erfindung betrifft eine Kupplungsanordnung, die in dem Antriebsstrang eines Fahrzeugs zur Drehmomentübertragung zwischen einem Antriebsaggregat und einem Getriebe, insbesondere einem Automatikgetriebe, wie Stufenautomatikgetriebe oder Automatikgetriebe mit kontinuierlich veränderbarem Übersetzungsverhältnis, eingesetzt werden kann, gemäß dem Oberbegriff des Anspruchs 1.

In Fahrzeugen, die mit einem Automatikgetriebe ausgestattet sind, wird das Drehmoment zwischen dem Antriebsaggregat und dem Getriebe im Allgemeinen über einen hydrodynamischen Drehmomentwandler übertragen. Ein derartiger hydrodynamischer Drehmomentwandler kann insbesondere im Anfahrzustand, also einem Zustand, in welchem eine Überbrückungskupplung des Wandlers nicht eingerückt ist, das von einem Antriebsaggregat abgegebene Drehmoment verstärken. Gleichzeitig begrenzt jedoch ein hydrodynamischer Drehmomentwandler auf Grund seiner hydrodynamischen Eigenschaften die im Anfahrzustand mögliche Drehzahl. Auf Grund des Umstandes, dass moderne Antriebsaggregate vergleichsweise hohe Drehmomente aufweisen, eine Drehmomentwandlungsfunktionalität im Anfahrzustand also grundsätzlich nicht mehr erforderlich ist, wird die Drehzahlbegrenzung eines hydrodynamischen Drehmomentwandlers im Anfahrzustand als problematisch empfunden, da einerseits sportliche Anfahrvorgänge damit ausgeschlossen sind und andererseits das Abrufen höherer Leistungen, die im Allgemeinen mit höherer Drehzahl erreichbar sind, damit nicht möglich ist. Zu dem sind hydrodynamische Drehmomentwandler auf Grund des darin enthaltenen hydrodynamischen Kreislaufs und der hierfür erforderlichen Komponenten, insbesondere Pumpenrad, Turbinenrad und Leitrad, vergleichsweise komplexe und kostenintensive Systeme.

Die WO 2006/100966 A1 offenbart eine Kupplungsanordnung gemäß dem Oberbegriff des Anspruchs 1. Bei dieser bekannten Kupplungsanordnung wird Fluid in den Innenraum des Gehäuses über zwei Fluidströmungswege zugeführt bzw. aus diesem Innenraum abgeführt. Dabei besteht zwischen einem einen Torsionsschwingungsdämpfer enthaltenden ersten Raumbereich und einen zweiten Raumbereich über eine in einem diese beiden Raumbereiche trennenden Element ausgebildete Öffnung eine permanente Fluidaustauschverbindung. In dem die beiden Reibflächenformationen in Reibeingriff bringenden Anpresselement ist eine weitere Durchtrittsöffnung vorhanden, welche eine Verbindung zwischen den beiden Raumbereichen herstellt. Diese Verbindung besteht jedoch nur dann, wenn die Reibflächenformationen nicht in Reibeingriff miteinander stehen und Fluid aus dem ersten Raumbereich über die mit Abstand zueinander positionierten Oberflächen der Reibflächenformationen hinweg in den zweiten Raumbereich strömen kann.

Es ist die Aufgabe der vorliegenden Erfindung, eine Kupplungsanordnung, insbesondere für den Antriebsstrang eines Fahrzeugs vorzusehen, welche bei einfach zu realisierendem Aufbau und verbesserter Wärmeabfuhr aus dem Bereich dem Reibflächenformationen entsprechend einfach anzusteuern ist, ohne dabei die für hydrodynamische Drehmomentwandler typischen Begrenzungen im Anfahrzustand einzuführen.

Erfindungsgemäß wird diese Aufgabe gelöst durch eine Kupplungsanordnung, insbesondere für den Antriebsstrang eines Fahrzeugs, gemäß Anspruch 1. Diese umfasst ein mit Fluid gefülltes oder füllbares Gehäuse, eine mit dem Gehäuse um eine Drehachse drehbare erste Reibflächenformation, eine mit einem Abtriebselement um die Drehachse drehbare zweite Reibflächenformation, ein mit dem Gehäuse um die Drehachse drehbares und einen Innenraum des Gehäuses in einen ersten Raumbereich und einen zweiten Raumbereich teilendes Anpresselement, wobei in Abhängigkeit des Fluiddrucks im ersten Raumbereich und des Fluiddrucks im zweiten Raumbereich das Anpresselement bezüglich des Gehäuses zum Herstellen und Aufheben eines Reibeingriffs zwischen der ersten Reibflächenformation und der zweiten Reibflächenformation bewegbar ist, ein Fluidversorgungssystem für den ersten Raumbereich oder/und den zweiten Raumbereich, umfassend wenigstens einen ersten Fluidströmungsweg für den ersten Raumbereich oder/und wenigstens einen zweiten Fluidströmungsweg für den zweiten Raumbereich, wobei über wenigstens einen Fluidströmungsweg dem zugeordneten Raumbereich Fluid zuführbar ist und über weinigstens einen Fluidströmungsweg von dem zugeordneten Raumbereich Fluid abführbar ist.

Eine erfindungsgemäß aufgebaute nasslaufende Kupplungsanordnung, also ein System, das sich von einem hydrodynamischen Drehmomentwandler oder einer Fluidkupplung grundsätzlich dadurch unterscheidet, dass ein Drehmoment direkt, also auf mechanischem Wege ohne der Ausnutzung einer Fluidzirkulation zwischen einem Pumpenrad und einem Turbinenrad übertragen wird, ist beispielsweise von dem so genannten Zwei-Leitungs-Typ, bei welchem nur zwei Fluidströmungswege existieren. Über diese beiden Fluidströmungswege, von welchen jeder mit einem der Raumbereiche des Innenraums des Gehäuses in Verbindung steht, wird eine Fluidströmung durch das Gehäuse hindurch aufgebaut, welche insbesondere in einem Anfahrzustand, in welchem durch die reibend miteinander in Kontakt stehenden Reibflächen der beiden Reibflächenformationen Wärme generiert wird, Wärme aus dem Bereich dieser Reibflächen und aus dem Inneren des Gehäuses abgetragen wird. Gleichzeitig kann mit diesen beiden Fluidströmungswegen der Fluiddifferenzdruck zwischen den beiden Raumbereichen so eingestellt werden, dass über die nasslaufende Kupplungsanordnung auch im Anfahrzustand ein ausreichendes Drehmoment übertragen werden kann, ohne dass dabei irgendeine Begrenzung hinsichtlich der im Anfahrzustand zugelassenen Antriebsdrehzahl eines Antriebsaggregats existiert.

Die erfindungsgemäße nasslaufende Kupplungsanordnung ist von einfachem Aufbau. Entsprechend einfach kann auch ein Fluidversorgungssystem, beispielsweise angeordnet in einem Automatikgetriebe, gestaltet sein, wenn z.B. zwei Fluidströmungswege vorhanden sind, die betriebszustandabhängig eine Verbindung mit einer Quelle für unter Druck stehendes Fluid, also beispielsweise einer Pumpe, oder einem im Wesentlichen drucklosen Fluidreservoir, also beispielsweise dem Ölsumpf in einem Automatikgetriebe, herstellen. Dies bedeutet, dass das Fluidversorgungssystem z.B. von dem Zwei-Leitungs-Typ ist mit je einem Fluidströmungsweg für den ersten Raumbereich und den zweiten Raumbereich.

Um auch dann, wenn grundsätzlich das Anpresselement eine fluiddichte Trennung der beiden Raumbereiche realisiert, den Fluidstrom durch das Gehäuse hindurch und damit die Wärmeabfuhr aus dem Bereich des Gehäuses zu ermöglichen, wird vorgeschlagen, dass in dem Anpresselement wenigstens eine Durchtrittsöffnung für den Fluidaustausch zwischen dem ersten Raumbereich und dem zweiten Raumbereich vorgesehen ist.

Auch bei Ausgestaltung des Fluidversorgungssystems gemäß dem so genannten Drei-Leitungstyp mit einem Fluidströmungsweg für den zweiten Raumbereich und zwei Fluidströmungswegen für den ersten Raumbereich ist ein vergleichsweise einfacher Aufbau realisierbar, bei welchem gleichwohl die Übertragung hoher Drehmomente bei sehr geringer reibmäßiger bzw. thermischer Belastung der verschiedenen reibend miteinander in Wechselwirkung tretenden Bauteile erreicht werden kann.

Bei einer weiteren alternativen Ausgestaltungsvariante kann vorgesehen sein, dass das Fluidversorgungssystem von dem Ein-Leitungs-Typ ist mit einem Fluidströmungsweg für den zweiten Raumbereich. Dabei ist also ein Fluidaustausch nur für den zweiten Raumbereich vorgesehen, so dass durch entsprechende Fluiddruckvariation darin und dementsprechende Beaufschlagung des Anpresselements die Kupplungsanordnung ein- bzw. ausgerückt werden kann.

Bei einer weiteren alternativen Ausgestaltungsvariante kann vorgesehen sein, dass das Fluidversorgungssystem von dem erweiterten 2-Leitungs-Typ ist mit einem Fluidströmungsweg für den zweiten Raumbereich und einem Fluidzuführweg und einem Fluidabführweg für den ersten Raumbereich.

Beispielsweise kann vorgesehen sein, dass wenigstens die zweite Reibflächenformation, vorteilhafterweise auch die erste Reibflächenformation, im ersten Raumbereich angeordnet ist.

Die Kopplung des Anpresselements mit dem Gehäuse kann beispielsweise durch eine axialelastische Kopplungsanordnung realisiert sein, die einerseits zwar eine im Wesentlichen drehfeste Anbindung herstellt, andererseits aber auch die zum Einrücken und Ausrücken der Kupplungsanordnung erforderliche Axialbewegbarkeit des Anpresselements gewährleistet.

Beispielsweise kann die Kopplungsanordnung eine Mehrzahl von Blattfedern umfassen.

Bei einer hinsichtlich der Energiebilanz besonders vorteilhaften Ausgestaltungsform wird vorgeschlagen, dass dem Anpresselement eine Vorspannanordnung zugeordnet ist, welche das Anpresselement in Richtung Herstellen des Reibeingriffs der ersten Reibflächenformation mit der zweiten Reibflächenformation vorspannt. Eine derartige Kupplungsanordnung ist von dem Normal-Geschlossen-Typ. Durch die Vorspannwirkung der Vorspannanordnung ist, unbeachtlich des Fluiddifferenzdrucks zwischen den beiden Raumbereichen, die Kupplungsanordnung grundsätzlich in einem Drehmoment-übertragungszustand, so dass in einem normalen Fahrzustand, in welchem insbesondere bei Kombination mit einem Automatikgetriebe die nasslaufende Kupplungsanordnung nicht ausgerückt oder wieder eingerückt werden muss, kein oder nur ein vergleichsweise geringerer Differenzdruck zwischen den beiden Raumbereichen aufgebaut werden muss, um das vom Antriebsaggregat abgegebene Antriebsdrehmoment übertragen zu können.

Bei einer alternativen Ausgestaltungsform kann vorgesehen sein, dass dem Anpresselement eine Vorspannanordnung zugeordnet ist, welche das Anpresselement in Richtung Aufheben des Reibeingriffs der ersten Reibflächenformation mit der zweiten Reibflächenformation vorspannt. Bei dieser Auslegung ist also die Kupplungsanordnung für den so genannten Normal-Offen-Typ. Hier muss im Fahrzustand permanent ein Fluiddifferenzdruck zwischen den beiden Raumbereichen aufgebaut werden, um die Kupplungsanordnung eingerückt zu halten. In einer Startphase, also auch beim Starten eines Antriebsaggregats, unterbricht jedoch diese Kupplungsanordnung die Drehmomentübertragungsverbindung bereits vor dem Automatikgetriebe, so dass nicht durch vorangehende Ansteuermaßnahmen dafür gesorgt werden muss, dass in dem Automatikgetriebe kein Gang eingelegt ist, also eine Drehmomentübertragungsverbindung im Bereich des Automatikgetriebes unterbrochen ist.

Bei einer baulich sehr einfach zu realisierenden Ausgestaltungsform wird vorgeschlagen, dass die Vorspannanordnung die axial elastische Kopplungsanordnung umfasst. Hier wird also eine Funktionenverschmelzung in ein- und derselben Baugruppe realisiert.

Alternativ oder zusätzlich ist es möglich, dass die Vorspannanordnung eine das Kolbenelement bezüglich des Gehäuses axial vorspannende Tellerfedereinheit umfasst.

Um auch bei einer erfindungsgemäß aufgebauten nasslaufenden Kupplung das Entstehen oder Übertragen von Drehschwingungen oder Drehungleichförmigkeiten eines Antriebsstrangs zu verhindern, wird vorgeschlagen, dass die zweite Reibflächenformation mit dem Abtriebselement über eine Torsionsschwingungsdämpferanordnung zur Drehung um die Drehachse gekoppelt ist.

Weiter kann vorgesehen sein, dass die Torsionsschwingungsdämpferanordnung im ersten Raumbereich angeordnet ist, wobei zum Bereitstellen einer baulich sehr kompakten Ausgestaltung vorgesehen sein kann, dass die Torsionsschwingungsdämpferanordnung die erste Reibflächenformation oder/und die zweite Reibflächenformation wenigstens bereichsweise radial überlappt.

Gemäß einem besonders vorteilhaften Aspekt ist bei der erfindungsgemäßen Kupplungsanordnung weiter vorgesehen, dass sie wenigstens ein Förderelement zur Erzeugung einer internen Fluidzirkulation aufweist. Durch diese Erzeugung einer internen Fluidzirkulation ist sichergestellt, dass vor allem dann, wenn im Schlupfzustand die Reibflächenformationen mit entsprechenden Reibflächen sich gleitend bezüglich einander bewegen, entstehende Wärme aus diesem Bereich abgeführt werden kann.

Um eine gleichmäßige Verteilung der Fluidzirkulation in Umfangsrichtung um die Drehachse zu erlangen, wird vorgeschlagen, dass in Umfangsrichtung aufeinander folgend eine Mehrzahl von Förderelementen vorgesehen ist.

Wenigstens ein Förderelement kann eine mit dem Gehäuse um die Drehachse drehbare, radial und axial ausgedehnte Förderfläche umfassen. Es ist daher darauf hinzuweisen, dass eine radiale bzw. axiale Ausdehnung einer derartigen Fläche nicht notwendigerweise bedeutet, dass die Fläche eine in radialer bzw. axialer Richtung sich exakt erstreckende Flächenkomponente aufweist. Es ist selbstverständlich auch eine bezüglich einer Radiallinie bzw. der Axialrichtung angestellt orientierte Fläche als derartige radial und axial ausgedehnte Förderfläche zu verstehen.

Insbesondere dann, wenn das Anpresselement mit dem Gehäuse zur gemeinsamen Drehung um die Drehachse verbunden ist, ist bei einer besonders einfach zu realisierenden Ausgestaltungsform vorzugsweise vorgesehen, dass die Förderfläche wenigstens bereichsweise an dem Anpresselement vorgesehen ist.

Weiterhin kann der Aufbau derart sein, dass die zweite Reibflächenformation ein mit dem Anpresselement verbundenes Reibelement umfasst und dass die Förderfläche wenigstens bereichsweise an dem Reibelement oder/und einem das Reibelement mit dem Anpresselement verbindenden Zwischenelement vorgesehen ist. Alternativ zu einer Variante, bei welcher also das Anpresselement selbst auch einen Teil der zweiten Reibflächenformation bereitstellt und in Reibwechselwirkung mit der ersten Reibflächenformation bringbar ist, ist hier also ein mehrteiliger Aufbau vorgesehen, bei welchem entweder das Reibelement direkt mit dem Anpresselement verbunden ist oder ein Zwischenelement die Verbindung herstellt. Dabei kann dann vorgesehen sein, das die Förderfläche wenigstens bereichsweise an dem Reibelement oder/und dem Zwischenelement vorgesehen ist.

Beispielsweise kann weiter auch zur Optimierung der Geometrie einer derartigen Förderfläche vorgesehen sein, dass die Förderfläche an wenigstens zwei Elementen von Anpresselement, Reibelement und, sofern vorhanden, Verbindungselement vorgesehen ist.

Wenigstens ein Förderelement kann als integraler Bestandteil des Gehäuses ausgebildet sein oder/und an einem an dem Gehäuse festgelegten Förderorgan vorgesehen sein.

Auch ist es möglich, dass das Förderelement einen integralen Bestandteil des Anpresselements oder/und eines mit dem Anpresselement verbundenen Reibelements der zweiten Reibflächenformation oder/und eines das Reibelement mit dem Anpresselement verbindenden Zwischenelements bildet oder/und an einem damit fest verbundenen Förderorgan vorgesehen ist.

Die Ausgestaltung als integraler Bestandteil bringt den Vorteil der verringerten Bauteileanzahl mit sich. Das Vorsehen eines Förderelements an einem separat anzubringenden Förderorgan gibt auch unter Berücksichtigung der für ein das Förderorgan tragendes Bauteil vorzusehenden Geometrie eine größere Freiheit bei der Ausgestaltung der Geometrie des Förderelements bzw. einer Förderfläche.

Weiter kann beispielsweise vorgesehen sein, dass wenigstens eine Reibflächenformation von erster Reibflächenformation und zweiter Reibflächenformation wenigstens ein Reibelement mit wenigstens einem eine Reibfläche bereitstellenden Reibbelag umfasst, und dass in wenigstens einem Reibbelag wenigstens eine Öffnung für den Durchtritt von Fluid vorgesehen ist.

Um auch bei vergleichsweise großen Drehzahldifferenzen zwischen Antrieb und Abtrieb, insbesondere bei sehr kleiner Abtriebsdrehzahl, für eine ausreichende Kühlwirkung sorgen zu können, wird vorgeschlagen, dass ein durch die interne Fluidzirkulation erzeugter Fluidstrom bei einer Drehzahl des Gehäuses im Bereich von 2.000 U/min und einer Drehzahl des Abtriebselements im Bereich von 0 U/min wenigstens das Zweifache eines durch das Fluidversorgungssystem für den ersten Raumbereich erzeugten Fluidstroms in und aus dem ersten Raumbereich ist.

Insbesondere dann, wenn die zweite Reibflächenformation ein mit dem Anpresselement verbundenes Reibelement umfasst, ist es besonders vorteilhaft, wenn der zweite Raumbereich durch das Anpresselement und das Reibelement oder/und ein das Anpresselement mit dem Reibelement verbindendes Verbindungselement begrenzt ist. Da somit auch das Anpresselement oder/und ein Verbindungselement den zweiten Raumbereich begrenzt, belastet die zwischen den beiden Raumbereichen bestehende Druckdifferenz bei Betätigung der Kupplungsanordnung die Verbindung zwischen dem Anpresselement und dem Reibelement oder ggf. dem Verbindungselement entsprechend nur geringer.

Um ein weiter verbessertes Betätigungsverhalten der Kupplungsanordnung beim Herstellen bzw. Aufheben des Drehmomentübertragungszustandes erlangen zu können, wird weiter vorgeschlagen, dass wenigstens eine Reibflächenformation von erster Reibflächenformation und zweiter Reibflächenformation, vorzugsweise die zweite Reibflächenformation, wenigstens ein axial elastisches Reibelement, vorzugsweise mit gewellter oder/und tellerartiger Formgebung, umfasst.

Um insbesondere den Bereich, in welchem durch Reibkontakt Wärme entstehen kann, also den Bereich der Reibflächenformationen, ausreichend mit zur Kühlung beitragendem Fluid versorgen zu können, wird weiter vorgeschlagen, dass das Anpresselement wenigstens eine Öffnung zur Zufuhr von Fluid in den Bereich der Reibflächenformationen aufweist. Dies ist insbesondere dann von Vorteil, wenn, wie vorangehend ausgeführt, der Aufbau derart ist, dass vor allem im Schlupfzustand, also bei Relativdrehung der beiden Reibflächenformationen bezüglich einander eine Fluidzirkulation aufgebaut wird, die diese Reibflächenformationen umströmt.

Um durch eine Erhöhung der gesamt wirksamen Fläche das übertragbare Drehmoment erhöhen zu können, wird vorgeschlagen, dass wenigstens eine Reibflächenformation von erster Reibflächenformation und zweiter Reibflächenformation eine Mehrzahl von Reibelementen umfasst.

Bei einer besonders vorteilhaften Ausgestaltungsform wird vorgeschlagen, dass das Volumen des ersten Raumbereichs größer ist als das Volumen des zweiten Raumbereichs und dass zum Herstellen des Reibeingriffs der Reibflächenformationen dem zweiten Raumbereich Fluid über den zweiten Fluidströmungsweg zuführbar ist. Es ist somit dafür gesorgt, dass zum Einrücken der Kupplungsanordnung derjenige Raumbereich mit Fluid zu versorgen ist, welcher das kleinere Gesamtvolumen aufweist. Vor allem bei in der Anfangsphase nur teilweise mit Fluid gefülltem Gehäuse führt dies zu deutlich schneller durchzuführenden Einrückvorgängen.

Die vorliegende Erfindung betrifft ferner ein Antriebssystem für ein Fahrzeug, umfassend ein Antriebsaggregat, ein Automatikgetriebe und eine erfindungsgemäße Kupplungsanordnung im Drehmomentübertragungsweg zwischen dem Antriebsaggregat und dem Automatikgetriebe.

Ist bei einem derartigen Antriebssystem die Kupplungsanordnung als Normal-Geschlossen-Kupplung ausgebildet, kann vorgesehen sein, dass ein durch die Vorspannwirkung der Vorspannanordnung generierbares Kupplungsmoment größer ist als ein maximales Antriebsdrehmoment des Antriebsaggregats. Dies bedeutet, dass im Fahrzustand eine Fluideinspeisung in das Gehäuse grundsätzlich nicht erforderlich ist. Zum einen ist das durch die Vorspannanordnung selbst generierbare Kupplungsmoment so definiert, dass auch das maximale Antriebsdrehmoment übertragen werden kann und mithin eine Unterstützung durch einen Fluiddifferenzdruck nicht erforderlich ist. Zum anderen wird das System nicht in einen Schlupfzustand geraten, in welchem Wärme entsteht, die durch eine Fluidströmung abgetragen werden müsste.

Bei einer alternativen Auslegung des Antriebssystems kann vorgesehen sein, dass ein durch die Vorspannwirkung der Vorspannanordnung generierbares Kupplungsmoment kleiner ist als ein maximales Antriebsdrehmoment des Antriebsaggregats. Hier ist also im Fahrzustand grundsätzlich eine Unterstützung des durch die Vorspannanordnung generierbaren Kupplungsmomets durch einen Fluiddifferenzdruck erforderlich, und zwar zumindest dann, wenn das Antriebsdrehmoment des Antriebsaggregats über dem oder im Bereich des durch die Vorspannanordnung generierbaren Kupplungsmoments liegt. Dies ist zwar energetisch etwas ungünstiger, da während bestimmten Phasen im Fahrzustand ein entsprechender Fluiddifferenzdruck aufgebaut werden muss, andererseits ermöglicht diese Auslegung in der Startphase ein deutlich schnelleres Ausrücken der nasslaufenden Kupplungsanordnung, da nur ein geringerer Fluiddifferenzdruck aufgebaut werden muss, um entgegen der Vorspannwirkung der Vorspannanordnung das Kolbenelement in Richtung Auskuppeln bewegen zu können.

Bei einem derartigen System kann weiter vorgesehen sein, dass in einem Fahrzustand des Antriebssystems ein Fluiddifferenzdruck zwischen dem ersten Raumbereich und dem zweiten Raumbereich derart eingestellt wird, dass das Kupplungselement der Kupplungsanordnung einen vorbestimmten Sicherheitsabstand über dem aktuellen Antriebsdrehmoment des Antriebsaggregats liegt. Es wird somit sichergestellt, dass auch Drehmomentschwankungen um das aktuelle Antriebsdrehmoment des Antriebsaggregats herum die Kupplungsanordnung nicht in einen Schlupfzustand bringen können.

Beispielsweise kann vorgesehen sein, dass der vorbestimmte Sicherheitsabstand im Bereich von 5 % bis 30 %, vorzugsweise 10 % bis 20 %, des aktuellen Antriebsdrehmoments des Antriebsaggregats liegt.

Bei dem erfindungsgemäßen Antriebssystem kann ein Federelement vorgesehen sein, welches auf das Anpresselement eine zum Übertragen zumindest eines Teils eines Maximalen Motormoments ausreichenden Kraft ausübt.

Die vorliegende Erfindung wird nachfolgend mit Bezug auf die beiliegenden Figuren detailliert beschrieben. Es zeigt:
- Fig. 1: eine Teil-Längsschnittansicht einer Kupplungsanordnung gemäß einer ersten Ausgestaltungsform;
- Fig. 2: eine der Fig. 1 entsprechende Darstellung einer alternativen Ausgestaltungsart;
- Fig. 3: eine Axialansicht eines mit einem Kupplungskolben verbundenen Reibelements der in den Fig. 1 und 2 gezeigten Kupplungsanordnungen;
- Fig. 4: eine Abwandlung der in Fig. 2 gezeigten Ausgestaltungsart;
- Fig. 5: ein Prinzipdiagramm der verschiedenen bei der Kupplungsanordnung der Fig. 4 vorhandenen Fluidströmungen;
- Fig. 6: eine weitere der Fig. 1 entsprechende Darstellung einer alternativen Ausgestaltungsart;
- Fig. 7: eine Abwandlung der in Fig. 6 gezeigten Ausgestaltungsart;
- Fig. 8: eine Abwandlung der in Fig. 6 gezeigten Ausgestaltungsart zum Erläutern einer Fluidversorgung;
- Fig. 9: eine der Fig. 8 entsprechende Darstellung zum Erläutern einer alternativen Fluidversorgung;
- Fig. 10: eine Abwandlung der in Fig. 1 gezeigten Ausgestaltungsart;
- Fig. 11: eine Darstellung einer weiteren Kupplungsanordnung zum Erläutern von Ausgestaltungsvariationen;
- Fig. 12: eine weitere Darstellung einer alternativen Kupplungsanordnung;
- Fig. 13: eine Detailansicht der Reibflächenformationen der in Fig. 12 gezeigten Kupplungsanordnung;
- Fig. 14: eine Prinzip-Teilaxialansicht eines mit Reibbelag versehenen Reibelements;
- Fig. 15: eine der Fig. 14 entsprechende Darstellung eines alternativ ausgestalteten Reibelements.

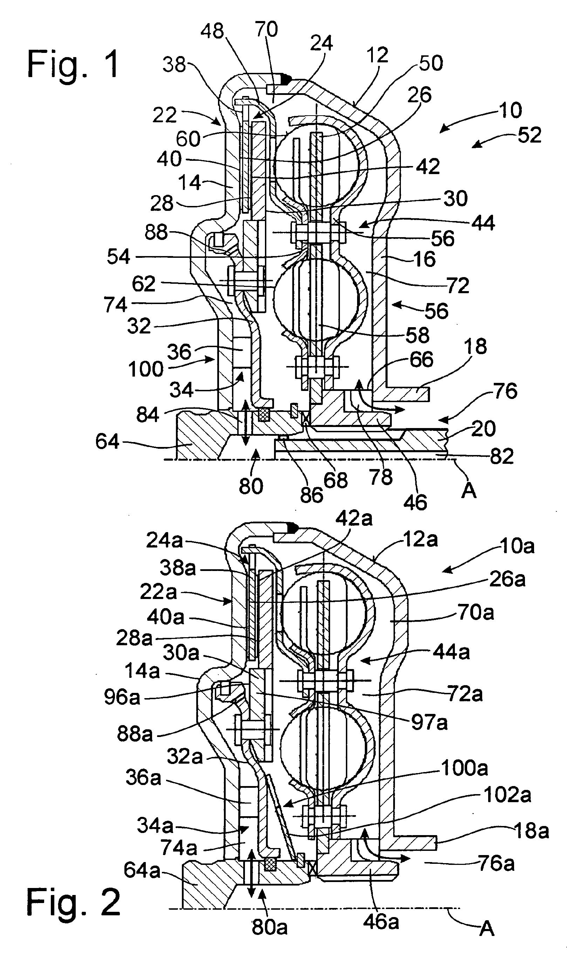

In Fig. 1 ist eine nasslaufende Kupplungsanordnung für den Antriebsstrang eines Fahrzeugs allgemein mit 10 bezeichnet. Diese Kupplungsanordnung 10 umfasst ein Gehäuse 12, dessen einem Antriebsaggregat zugewandt zu positionierende Gehäuseschale 14 über eine nicht dargestellte Flexplattenbaugruppe oder dergleichen mit einer Antriebswelle, also beispielsweise einer Kurbelwelle einer Brennkraftmaschine, zur gemeinsamen Drehung um eine Drehachse A gekoppelt werden kann. Eine mit der Gehäuseschale 14 radial außen beispielsweise durch Verschweißung fest verbundene Gehäuseschale 16 ist in einem Antriebssystem bzw. Antriebsstrang einem Getriebe zugewandt zu positionieren und kann mit einer radial inneren Pumpennabe 18 in ein derartiges Getriebe eingreifen, um bei Rotation des Gehäuses 10 um die Drehachse A eine in einem Getriebe angeordnete Fluidpumpe, beispielsweise Ölpumpe, anzutreiben. Ein derartiges Getriebe, mit welchem die Kupplungsanordnung 10 bevorzugt zu koppeln ist, ist ein Automatikgetriebe, beispielsweise ein Stufenautomatikgetriebe oder ein Automatikgetriebe mit kontinuierlich veränderbarem Übersetzungsverhältnis. Eine Eingangswelle 20 eines derartigen Getriebes ist in Fig. 1 erkennbar.

Die Kupplungsanordnung 10 umfasst zwei Reibflächenformationen 22, 24. Die Reibflächenformation 22 ist mit dem Gehäuse 10 um die Drehachse A drehbar bzw. zum Teil durch das Gehäuse bzw. die Gehäuseschale 14 selbst bereitgestellt. Dieses bildet nämlich eine Reibfläche 26, welcher eine Reibfläche 28 an einem Reibelement 30 axial gegenüber liegt. Dieses Reibelement 30 ist in seinem radial inneren Bereich mit einem als Anpresselement wirksamen Kolbenelement 32 fest verbunden, beispielsweise durch Vernietung. Das Kolbenelement 32 wiederum ist über eine Kopplungsanordnung 34, beispielsweise eine Mehrzahl von in Umfangsrichtung verteilt liegenden Blattfedern 36, mit dem Gehäuse 12, insbesondere der Gehäuseschale 14 drehfest, bezüglich dieser jedoch in Richtung der Drehachse A verlagerbar gekoppelt.

Die Reibflächenformation 24 umfasst ein allgemein als Lamelle bezeichnetes Reibelement 38 mit zwei Reibflächen 40, 42. Die Reibfläche 40, beispielsweise bereitgestellt durch einen Reibbelag, liegt der Reibfläche 26 an der Gehäuseschale 14 direkt axial gegenüber, und die Reibfläche 42, beispielsweise ebenfalls bereitgestellt durch einen Reibbelag, liegt der Reibfläche 28 am Reibelement 30 direkt axial gegenüber. Auch an diesem Reibelement 30 kann beispielsweise in dem mit dem Reibelement 38 zusammenwirkenden radialen Bereich ein Reibbelag vorgesehen sein. Auch kann selbstverständlich das Reibelement 30 dort, wo dessen Reibfläche 28 gebildet ist, mit Metallmaterial, beispielsweise Blechmaterial, aufgebaut sein.

Die Reibflächenformation 24, insbesondere also das Reibelement 38 derselben, ist über eine Torsionsschwingungsdämpferanordnung 44 mit einer als Abtriebselement wirksamen Abtriebsnabe 46 zur Drehung um die Drehachse A gekoppelt. Die Abtriebsnabe 46 weist eine Innenverzahnung auf, die mit einer entsprechenden Außenverzahnung der Abtriebswelle 20 in Drehkopplungseingriff steht bzw. bringbar ist.

Eine mit dem Reibelement 38 beispielsweise durch Verzahnungseingriff drehfeste Kopplungsscheibe 48 ist mit einem radial äußeren Zentralscheibenelement 50 beispielsweise durch Nietbolzen fest gekoppelt. Dieses radial äußere Zentralscheibenelement 50 bildet den Eingangsbereich einer radial äußeren ersten Dämpferstufe 52. Zwei miteinander fest verbundene Deckscheibenelemente 54, 56 bilden den Ausgangsbereich dieser radial äußeren Dämpferstufe 52 und bilden gleichzeitig den Eingangsbereich einer radial inneren zweiten Dämpferstufe 56. Ein radial inneres zweites Zentralscheibenelement 58 bildet den Ausgangsbereich der radial inneren zweiten Dämpferstufe 56 und ist mit der Abtriebsnabe 46 fest verbunden. Jede der beiden Dämpferstufen 52, 56 weist zur Drehmomentübertragung zwischen dem jeweiligen Eigangsbereich und Ausgangsbereich eine Dämpferelementenanordnung 60 bzw. 62 auf, jede beispielsweise umfassend eine Mehrzahl von in Umfangsrichtung aufeinander folgenden und ggf. teilweise auch radial ineinander geschachtelten Schraubendruckfedern.

Die Torsionsschwingungsdämpferanordnung 44 bzw. die Abtriebsnabe 46 ist im Gehäuse 12 bezüglich der Gehäuseschale 16 einerseits und einer mit der Gehäuseschale 14 festen Gehäusenabe 64 andererseits durch zwei Lageranordnungen 66, 68 axial zentriert gehalten. Diese können als Wälzkörperlager, alternativ jedoch auch als Gleitlager ausgebildet sein.

Durch das Kolbenelement 32 ist ein Innenraum 70 des Gehäuses 12 in einen auch die Torsionsschwingungsdämpferanordnung 44 enthaltenden ersten Raumbereich 72 und einen primär zwischen dem Kolbenelement 32 und der Gehäuseschale 14 gebildeten zweiten Raumbereich 74 unterteilt. Dabei ist das Kolbenelement 32 bezüglich der Gehäusenabe 64 einerseits und eines zylindrischen Abschnitts der Gehäuseschale 14 andererseits unter Einsatz jeweiliger Dichtungselemente fluiddicht und axial verschiebbar geführt.

Die nasslaufende Kupplungsanordnung 10 ist von dem so genannten Zwei-Leitungs-Typ und umfasst somit nur zwei Fluidströmungswege zu bzw. von den Raumbereichen 72, 74. Ein erster Fluidströmungsweg 76 führt zwischen dem Außenumfang der Abtriebswelle 20 und dem Innenumfang der Pumpennabe 18 über entsprechende Durchlässe 78 in der Lageranordnung 66 in den ersten Raumbereich 74 und ist somit axial in einem Bereich zwischen der Gehäuseschale 16 und der Torsionsschwingungsdämpferanordnung 44 zum ersten Raumbereich 72 offen. Alternativ oder zusätzlich wäre hier auch eine Weiterführung des ersten Strömungswegs 76 zwischen den beiden in Kämmeingriff stehenden Verzahnungen der Abtriebsnabe 46 und der Abtriebswelle 20 und über die Lageranordnung 68 hinweg möglich. Ein zweiter Fluidströmungsweg 80 führt durch eine zentrale Öffnung 82 der Abtriebswelle 20 und eine bzw. mehrere Öffnungen 84 zum zweiten Raumbereich 74. Um die beiden Fluidströmungswege 76, 80 voneinander zu trennen, kann die Abtriebswelle 20 an ihrem axialen Ende bezüglich der Gehäusenabe 64 durch ein Dichtungselement 86 fluiddicht abgeschlossen sein. Jeder Fluidströmungsweg kann selbstverständlich mehrere parallel zueinander zu dem selben Raumbereich führende Kanäle umfassen.

Über die beiden Fluidströmungswege 76, 80 ist es möglich, den Fluiddruck, im Allgemeinen also den Öldruck, des in den jeweiligen Raumbereichen 72, 74 vorhandenen Fluids und somit auch den Fluiddifferenzdruck definiert einzustellen. Es sei hierzu beispielsweise angenommen, dass die in Fig. 1 dargestellte nasslaufende Kupplungsanordnung 10 von dem so genannten Normal-Offen-Typ ist, das Kolbenelement 32 zusammen mit dem Reibelement 30 also in Richtung Ausrücken von der Gehäuseschale 14 weg und auf die Torsionsschwingungsdämpferanordnung 44 zu vorgespannt ist. Diese Vorspannung kann beispielsweise durch einen entsprechend vorgespannten Einbau der Tangentialblattfedern 36 der Kopplungsanordnung 34 bereitgestellt werden, welche dabei also eine Vorspannanordnung 100 für das Kolbenelement 32 bildet, kann selbstverständlich aber auch durch ein separates beispielsweise als Tellerfeder ausgebildetes Vorspannelement erzeugt werden, das zwischen der Gehäuseschale 14 oder der Gehäusenabe 64 und dem Kolbenelement 32 wirkt, wobei dann die Tangetialblattfedern 36 nur noch die Funktionalität der Drehkopplung erfüllen müssen. Bei nicht vorhandenem Fluiddruck, also bei beispielsweise fluidentleertem Gehäuse 12, belastet das Kolbenelement 32 mit dem Reibelement 30 das Reibelement 38 der zweiten Reibflächenformation 24 nicht. Die Drehmomentübertragungsverbindung zwischen dem Gehäuse 12 und der Abtriebsnabe 46 ist unterbrochen. Wird in diesem Zustand Fluid über den ersten Strömungsweg 76 in den ersten Raumbereich 72 gefördert, so kann es die einander mit Abstand gegenüber liegenden Reibflächen 26, 40 bzw. 28, 42 umströmen, kann dort Wärme abführen und über eine oder mehrere Durchtrittsöffnungen 88 im Kolbenelement 32 in den zweiten Raumbereich 74 gelangen und dort über den zweiten Fluidströmungsweg 80 abgezogen werden.

Soll die Kupplungsanordnung 10 dann in einen Drehmomentübertragungszustand gebracht werden, wird der Fluiddruck im ersten Raumbereich 72 erhöht, beispielsweise durch Erhöhen der Fluidfördermenge. Dies kann durch entsprechende Ansteuerung eines einer Fluidpumpe zugeordneten Ventils realisiert werden. Auf Grund der Drosselwirkung der Durchtrittsöffnungen 88 kann kein Fluiddruckausgleich zwischen den beiden Raumbereichen 72, 74 stattfinden, so dass ein Fluiddifferenzdruck aufgebaut wird, bei welchem der Fluiddruck im ersten Raumbereich 72 den Fluiddruck im im Wesentlichen drucklos gehaltenen zweiten Raumbereich 74 überwiegt. Es wird also eine Kraft aufgebaut, welche der Vorspannkraft der Blattfedern 36 sowie derjenigen Kraft, die durch Fliehkrafteinwirkung auf das im Raumbereich 74 vorhandene Fluid einwirkt, entgegen gerichtet ist. Mit weiter ansteigender Fluiddruckdifferenz wird das Kolbenelement 32 zusammen mit dem daran getragenen Reibelement 30 in Richtung Einrücken, also in Richtung von der Torsionsschwingungsdämpferanordnung 44 weg und auf das Reibelement 38 der zweiten Reibflächenformation 24 zu bewegt. Die einander gegenüber liegenden Reibflächen 26, 40 bzw. 28, 42 kommen in Reibeingriff. Es wird zunächst ein Schlupfzustand auftreten. Die dabei erzeugte Reibwärme wird durch das über die Durchtrittsöffnungen 88 abströmende Fluid zumindest zum Teil mitgenommen, so dass eine Überhitzung nicht auftreten kann. Steigt das so generierte Kupplungsmoment über das von einem Antriebsaggregat abgegebene aktuelle Antriebsdrehmoment an, so wird der Schlupfzustand beendet. Die beiden Reibflächenformationen 22, 24 drehen schlupffrei mit der gleichen Drehzahl und es kann durch entsprechende Ansteuerung eines im Antriebsstrang folgenden Getriebes ein Fahrzeug mit verschiedenen Gangstufen bzw. verschiedenen Übersetzungsverhältnissen betrieben werden, ohne die nasslaufende Kupplungsanordnung 10 wieder in Richtung Ausrücken verstellen zu müssen. Zum Ausrücken ist es bei diesem Aufbau im Wesentlichen nur erforderlich, den Fluiddruck im ersten Raumbereich 72 wieder zu senken, so dass durch die Wirkung der Blattfedern 36 einerseits und durch den im Raumbereich 74 insbesondere fliehkraftinduziert generierten Fluiddruck das Kolbenelement 32 zusammen mit dem Reibelement 30 in Richtung Ausrücken verstellt wird.

Bei einer alternativen Ausgestaltungsart eines so genannten Zwei-LeitungsSystems könnte vorgesehen sein, dass der zweite Fluidströmungsweg 80 nicht in den zweiten Raumbereich 74 führt, sondern in der Darstellung der Fig. 1 etwas weiter rechts zwischen dem Kolbenelement 32 und der Torsionsschwingungsdämpferanordnung 44 in den ersten Raumbereich 72 führt. Der zweite Raumbereich 74 ist dabei dann im Wesentlichen drucklos gehalten, kann also beispielsweise vollständig Fluid entleert oder nur teilweise mit Fluid gefüllt sein, welches das Verstellen in Richtung Ausrücken unter Fliehkrafteinwirkung unterstützt. Die Fluidzufuhr in den ersten Raumbereich 72 kann beispielsweise über den Fluidströmungsweg 76 erfolgen und die Fluidabfuhr dann über den Fluidströmungsweg 80. Es wird somit möglich, den Fluiddruck im ersten Raumbereich zum Verstellen des Kolbenelements 32 zu variieren, gleichzeitig jedoch eine definierte Fluidströmung in das und aus dem Gehäuse bereitzustellen, um Wärme abzutragen. Um diese teilweise Befüllung des zweiten Raumbereichs 74 mit ansonsten nicht weiter druckbeaufschlagtem Fluid zu gewährleisten, könnte im Kolbenelement 32 an geeigneter radialer Positionierung eine Leckageöffnung vorgesehen sein.

In Verbindung mit einem Automatikgetriebe ist die nasslaufende Kupplungsanordnung 10 primär als Anfahrelement wirksam. Im Fahrbetrieb bleibt sie geschlossen. Dies bedeutet, dass auf Grund der Normal-Offen-Charakteristik während des gesamten Fahrbetriebs die zum Erzeugen des Kupplungsmoments erforderliche Fuiddruckdifferenz zwischen den beiden Raumbereichen 72, 74 auch aufrecht erhalten werden muss. Um hierbei in energetischer Hinsicht möglichst effizient arbeiten zu können, kann vorgesehen sein, dass das durch Aufbau einer Fluiddruckdifferenz generierte Kupplungsmoment jeweils nur um einen vorbestimmten Sicherheitsabstand über dem aktuell von einem Antriebsaggregat abgegebenen bzw. über den Antriebsstrang zu übertragenden Drehmoment liegt, beispielsweise mit einem Sicherheitsabstand von 10 % bis 20 %, um auch bei Drehmomentschwankungen das Auftreten eines Schlupfzustands zu vermeiden. Alternativ ist es selbstverständlich möglich, den Ansteueraufwand dadurch möglichst gering zu halten, dass die Fluiddruckdifferenz in maximal möglichem Ausmaß aufrecht erhalten wird, also eine Anpassung an das tatsächlich übertragene Drehmoment nicht stattfindet. Aus Gründen der Reduzierung der Öffnungszeit der Kupplung kann es sinnvoll sein, den Fluiddifferenzdruck an das aktuell zu übertragende Drehmoment anzupassen.

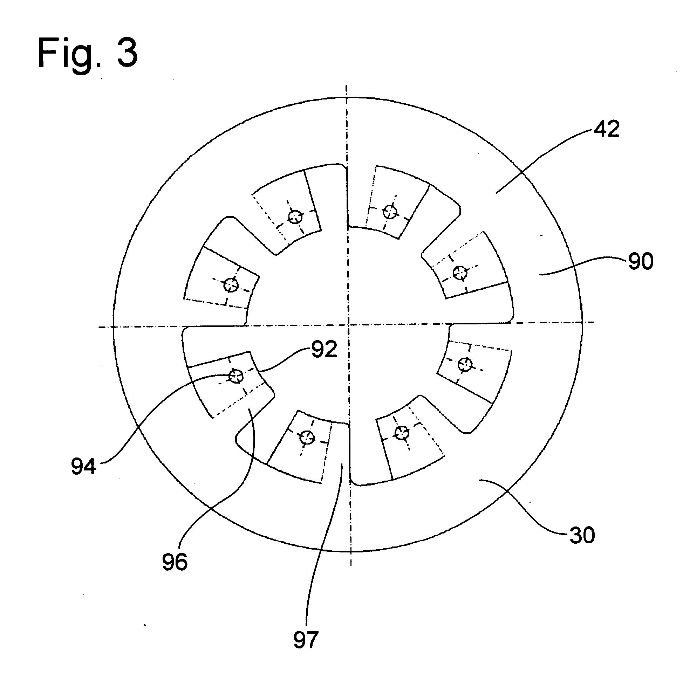

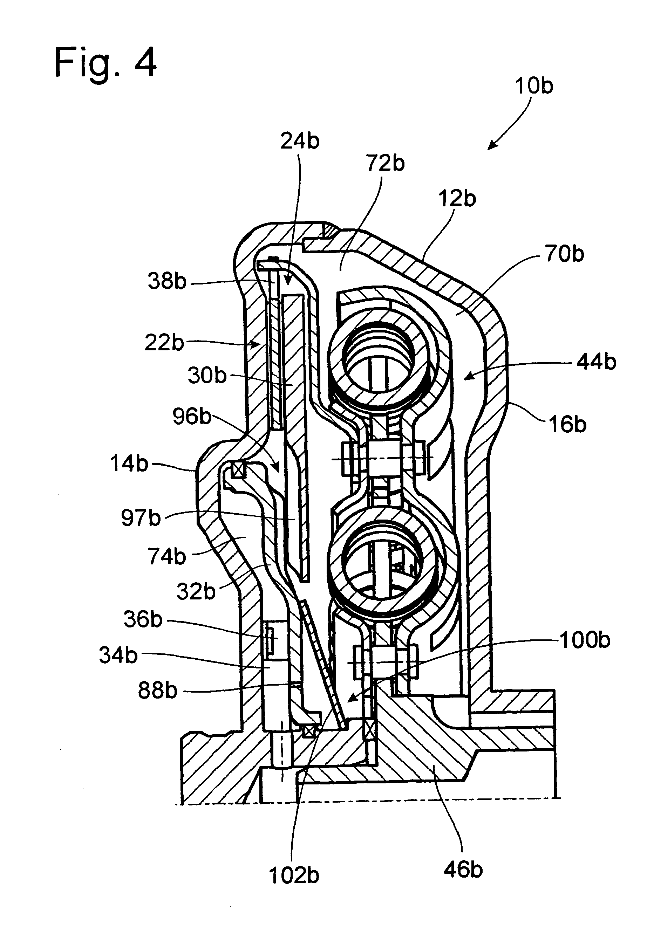

Die Fig. 3 zeigt die Axialansicht des Reibelements 30 der Kupplungsanordnung in Fig. 1. Man erkennt einen radial äußeren ringartigen Bereich 90, welcher beispielsweise die Reibfläche 42 bereitstellen kann oder einen entsprechenden Reibbelag tragen kann. Radial innerhalb dieses ringartigen Bereichs erkennt man armartige Abschnitte 92, die einerseits Durchtrittsöffnungen 94 für die zur Anbindung an das Kolbenelement 32 eingesetzten Befestigungselemente, beispielsweise Nietbolzen, bereitstellt. Weiterhin weisen diese Armabschnitte schaufelartige Bereiche 96 jeweils mit einer Förderfläche 97 auf, die im Rotationsbetrieb nach Art einer Pumpe dafür sorgen, dass eine die Reibflächen 26, 40 bzw. 28, 42 umströmende Fluidzirkulation aufgebaut wird, wobei die Torsionsschwingungsdämpferanordnung 44 nach Art einer Turbine wirksam ist. Dieser Fluidzirkulation ist dann die Fluidströmung durch das Gehäuse 12 vom ersten Raumbereich 72 über die Durchtrittsöffnungen 88 in den zweiten Raumbereich 74 überlagert. Diese Fluidzirkulation wird mit Bezug auf die in den Fig. 4ff. gezeigten Ausgestaltungsvarianten detaillierter erläutert.

Bei der vorangehend beschriebenen Ausgestaltungsform einer Kupplungsanordnung 10 des Normal-Offen-Typs ist eine Fluidströmungsrichtungsumkehr grundsätzlich nicht erforderlich. Das System kann also so gestaltet sein, dass Fluid nur über den ersten Fluidströmungsweg 76 zugeführt werden kann und auch nur über den zweiten Fluidströmungsweg 80 abgezogen werden kann. Soll beispielsweise beim Anhalten eines Fahrzeugs die Kupplungsanordnung 10 ausgerückt werden, muss lediglich die Förderrate, mit welcher Fluid in den ersten Raumbereich 72 gefördert wird, gesenkt werden bzw. die Fluidförderung eingestellt werden. Der Fluiddruck im ersten Raumbereich 72 sinkt dann, so dass auch der Fluiddifferenzdruck entsprechend abnimmt und durch die Vorspannwirkung der Blattfedern 36 das Kolbenelement 32 mit dem Reibelement 30 in Richtung Ausrücken bewegt wird. Es sei hier jedoch darauf hingewiesen, dass selbstverständlich das System auch so ausgelegt werden kann, dass zu einer schnelleren Ausrückbewegung des Kolbenelements 32 die Strömungsrichtung umgekehrt werden kann, also Fluid dann über den zweiten Fluidströmungsweg 80 in den zweiten Raumbereich 74 gefördert wird und entsprechend über den ersten Fluidströmungsweg 76 aus dem ersten Raumbereich 72 abströmen kann. Auch dies kann durch eine beispielsweise in Zuordnung zu einer Fluidpumpe vorgesehene Ventilanordnung, die entsprechend den erforderlichen Druckverhältnissen ansteuerbar ist, erzielt werden.

Eine alternative Ausgestaltungsform einer nasslaufenden Kupplungsanordnung ist in Fig. 2 gezeigt. Hier sind Komponenten, welche vorangehend beschriebenen Komponenten hinsichtlich Aufbau bzw. Funktion entsprechen, mit dem gleichen Bezugszeichen unter Hinzufügung eines Anhangs "a" bezeichnet. Im Folgenden wird lediglich auf die zur Ausgestaltungsform gemäß Fig. 1 bestehenden konstruktiven und auch funktionalen Unterschiede eingegangen.

Bei der in Fig. 2 dargestellten Ausgestaltungsform ist die Kupplungsanordnung 10 von dem Normal-Geschlossen-Typ. Hierzu ist eine Vorspannanordnung 100a vorgesehen, beispielsweise umfassend eine Tellerfeder 102a, die bezüglich des Gehäuses 12a, hier der Gehäusenabe 64a einerseits und des Kolbenelements 32a andererseits axial abgestützt ist. Die Vorspannanordnung 100a belastet das Kolbenelement 32a in Richtung auf die Gehäuseschale 14a zu und in Richtung von der Torsionsschwingungsdämpferanordnung 44a weg, also in Richtung Einkuppeln. Die Kopplungsanordnung 34a kann bei dieser Ausgestaltungsvariante so ausgelegt sein, dass sie lediglich die Drehankopplung des Kolbenelements 32a bewerkstelligt, eine wesentliche Axialkraftkomponente jedoch nicht einführt. Auch hier wäre es denkbar, dass die Vorspannkraft durch die Kopplungsanordnung 34a erzeugt wird, also die Blattfedern 36a das Kolbenelement 32a in Richtung Einrücken auf die Gehäuseschale 14a zu ziehen.

Bei diesem Aufbau der Kupplungsanordnung 10a als Normal-Geschlossen-Typ ist also eine Drehmomentenunterbrechung im Antriebsstrang bei nicht im Betrieb befindlichem Fahrzeug im Bereich der Kupplungsanordnung 10a nicht realisiert. Da zum Verhindern des Wegrollens eines Fahrzeugs im Allgemeinen in einem Automatikgetriebe eine Gangstufe o. dgl. eingelegt ist, muss beim Starten des Systems das Getriebe zunächst in seine Neutralposition gebracht werden, also eine Unterbrechung des Drehmomentflusses im Getriebe realisiert werden. Danach kann das Antriebsaggregat gestartet werden. Mit der Antriebswelle beginnt auch das Gehäuse 12a zu rotieren und dabei mit der Pumpennabe 18a eine Fluidpumpe anzutreiben. Das von der Fluidpumpe geförderte Fluid wird dabei zunächst über den zweiten Fluidströmungsweg 80a in den zweiten Raumbereich 74a eingeleitet, während der erste Raumbereich 72a über den ersten Fluidströmungsweg 76a in Verbindung mit einem im Wesentlichen drucklosen Reservoir ist. Der Fluiddruck im zweiten Raumbereich 74a steigt bezüglich des Fluiddrucks im ersten Raumbereich 72a an, bis die Vorspannkraft der Vorspannanordnung 100a überwunden wird und das Kolbenelement 32a in Richtung Ausrücken bewegt wird. Sobald die Drehmomentübertragungsverbindung durch Entkoppeln der beiden Reibflächenformationen 22a, 24a unterbrochen ist, werden auch die im Drehmomentenfluss dann folgenden Systembereiche, insbesondere die Torsionsschwingungsdämpferanordnung 44a und der Eingangsbereich des im Antriebsstrang folgenden Getriebes, nicht mehr mitgeschleppt. Soll nachfolgend zum Anfahren des Fahrzeugs vor oder nach dem Einlegen einer Gangstufe in dem Getriebe die Kupplungsanordnung 10a eingerückt werden, ist es erforderlich, den Fluiddruck im zweiten Raumbereich 74a wieder zu senken, so dass durch die Wirkung der Tellerfeder 102a, ggf. unterstützt durch einen nunmehr ansteigenden Fluiddruck im ersten Raumbereich 72a, das Kolbenelement 32a und damit auch das Reibelement 30a in Richtung Einkuppeln verstellt wird.

Die Auslegung der Vorspannanordnung 100a kann derart sein, dass die von ihr generierte Vorspannkraft ein Kupplungsmoment generiert, welches größer ist, als das maximale Antriebsdrehmoment eines Antriebsaggregats. In diesem Fall ist eine Unterstützung durch Fluiddruckerhöhung im ersten Raumbereich 72a grundsätzlich nicht erforderlich. Zum Einrücken ist es also ausreichend, den Fluiddruck im zweiten Raumbereich 74a beispielsweise durch gezielte Ableitung bzw. allmähliches Verbinden des zweiten Fluidströmungswegs 80a mit einem drucklosen Reservoir zu senken. Es muss dabei dann nicht gleichzeitig auch eine Fluidströmungsrichtungsumkehr mit zusätzlicher Einleitung von Fluid in den ersten Raumbereich 72a erfolgen. Die Wärme wird durch den Kühlölstrom aus dem Raumbereich 74a in den Raumbereich 72a und weiter über den Fluidströmungsweg 76a abgeführt. Ist die Kupplungsanordnung 10a dann vollständig eingerückt, kann die Fluidzufuhr eingestellt werden, da einerseits die beiden Reibflächenformationen 22a, 24a nicht mehr bezüglich einander schlupfen und somit keine Wärmeenergie mehr erzeugen, andererseits eine Unterstützung der Vorspannanordnung 100a durch eine Fluiddruckdifferenz zwischen den beiden Raumbereichen 72a, 74a nicht erforderlich ist, um das maximale Antriebsmoment übertragen zu können. Da die Kupplungsanordnung 10a im normalen Fahrbetrieb eines Fahrzeugs grundsätzlich nicht ausgerückt wird, da das Einlegen und Auslegen von Gängen bzw. das Ändern des Übersetzungsverhältnisses alleine durch Ansteuern des Automatigetriebes erfolgt, ist diese Auslegung besonders Energieeffizient, da praktisch während des gesamten Fahrbetriebs keine Energie aufgewandt werden muss, um eine Fluiddruckdifferenz zwischen den beiden Raumbereichen 72a, 74a aufrecht zu erhalten.

Bei einer alternativen Auslegung kann vorgesehen sein, dass die durch die Vorspannanordnung 100a bereitgestellte Vorspannkraft kleiner ist als das maximale Antriebsdrehmoment eines Antriebsaggregats. Dies bedeutet, dass dann, wenn das jeweils aktuell abgegebene Antriebsdrehmoment des Antriebsaggregats nicht über dem durch die Vorspannwirkung der Vorspannanordnung 100a generierbaren Kupplungsmoment liegt, eine Unterstützung durch eine Fluiddruckdifferenz nicht erforderlich ist. Steigt jedoch das Antriebsdrehmoment über dieses durch die Vorspannanordnung 100a generierbare Kupplungsmoment an, ist es erforderlich, durch Erhöhung des Fluiddrucks im ersten Raumbereich 72a, also entsprechende Fluidzufuhr über den ersten Fluidströmungweg 76a, eine zusätzliche Kraft aufzubauen, durch welche das Kolbenelement 32a bzw. das damit verbundene Reibelement 30a Richtung Einrücken belastet wird. Um auch bei dieser Auslegung möglichst energieeffizient zu arbeiten, kann die Fluiddruckdifferenz in Abhängigkeit vom jeweils aktuell abgegebenen Antriebsdrehmoment des Antriebsaggregats so eingestellt werden, dass das gesamte Kupplungsmoment um einen vorbestimmten Sicherheitsabstand, beispielsweise 10% bis 20% über dem aktuellen Antriebsdrehmoment des Antriebsaggregats liegt. Eine für einen jeweiligen Antriebszustand an sich nicht erforderliche, übermäßig hohe Fluiddruckdifferenz kann dadurch vermieden werden. Zur Minimierung des Ansteueraufwands ist es jedoch gleichwohl möglich, auch hier so zu arbeiten, dass immer dann, wenn die Kupplungsanordnung 10a im eingerückten Zustand sein soll, die maximal mögliche Fluiddruckdifferenz aufgebaut wird.

Mit dem erfindungsgemäßen Aufbau einer nasslaufenden Kupplungsanordnung des Zwei-Leitungs-Typs wird es möglich, in konstruktiver und ansteuerungstechnisch einfacher Art und Weise eine Drehmomentübertragungsverbindung zwischen einem Antriebsaggregat und einem Automatikgetriebe zu realisieren, welche, anders als bei hydrodynamischen Drehmomentwandlern, keine durch Fluidzirkulation generierte Drehmomentenunterstützung liefern kann, jedoch auch keine Beschränkung der im Anfahrzustand realisierbaren Drehzahlen eines Antriebsaggregats auferlegt. Ein weiterer Vorteil der erfindungsgemäßen nasslaufenden Kupplungsanordnung liegt darin, dass auf Grund der Tatsache, dass die bei einem hydrodynamischen Drehmomentwandler bzw. einer Fluidkupplung vorhandenen Systemkomponenten zur Fluidumwälzung, also ein Turbinenrad, ein Pumpenrad und ggf. ein Leitrad, nicht erforderlich sind, mehr Bauraum für die Torsionsschwingungsdämpferanordnung, also allgemein das Federvolumen zur Verfügung gestellt werden kann.

Bei Ausgestaltung nach dem so genannten Zwei-Leitungs-Typ kann an Stelle des Vorsehens einer oder mehrerer Durchtrittsöffnungen, welche die beiden Raumbereiche miteinander verbinden, auch eine gezielte Fluidleckage im Bereich des fluiddichten Anschlusses des Kolbenelements bzw. des Reibelements bezüglich des Gehäuses oder der Abtriebswelle bzw. der Abtriebsnabe für den Fluidübergang zwischen den beiden Raumbereichen sorgen. Begrenzt das Reibelement beispielsweise mit seinem radial inneren Bereich den zweiten Raumbereich, so kann auch im Angrenzungsbereich des Reibelements an das Kolbenelement eine gezielte Fluidleckage zum Fluidaustausch zwischen den beiden Raumbereichen genutzt werden.

Eine weitere Ausgestaltungsform einer nasslaufenden Kupplungsanordnung ist in Fig. 4 gezeigt. Komponenten, die vorangehend beschriebenen Komponenten hinsichtlich Aufbau bzw. Funktion entsprechen, sind mit dem gleichen Bezugszeichen unter Hinzufügung des Anhangs "b" beschrieben.

Der grundsätzliche Aufbau der nasslaufenden Kupplungsanordnung 10b der Fig. 4 entspricht dem vorangehend mit Bezug auf die Fig. 2 beschriebenen, so dass auf die diesbezüglichen Ausführungen verwiesen werden kann und im Folgenden lediglich auf die wesentlichen bestehenden Unterschiede eingegangen wird bzw. das Funktionsprinzip der nasslaufenden Kupplungsanordnung zur Erzeugung einer internen Fluidzirkulation noch einmal dargestellt wird.

Man erkennt in der Fig. 4, dass die das als Anpresselement wirksame Kolbenelement 32b und das Reibelement 30b umfassende Baugruppe im Verbund jeweilige in Umfangsrichtung aufeinander folgende Förderelemente 96b bereitstellt. D.h., bei jedem Förderelement 96b ist ein Teilbereich der Förderfläche 97b am Kolbenelement 32b gebildet und ein daran anschließender Teilbereich am Reibelement 30b. Es lässt sich somit vor allem die Größe der wirksamen Förderfläche 97b bei jedem Förderelement 96b in einem größeren Variationsspektrum einstellen. Das Bereitstellen der Förderflächen 97b bzw. der beiden Teilbereiche am Kolbenelement 32b und am Reibelement 30b kann beispielsweise durch Umformen entsprechender Blechteile, selbstverständlich aber auch durch spanabhebende oder gusstechnische Herstellung erfolgen. Dabei kann selbstverständlich dann auch der möglicherweise vorzugebende Neigungswinkel bezüglich einer die Drehachse A enthaltenden Ebene, beispielsweise der Zeichenebene in Fig. 4 eingestellt werden.

Kann das Reibelement 30b nicht direkt mit dem Kolbenelement 32b verbunden werden, ist hierzu beispielsweise ein ringartiges Zwischenelement erforderlich, das mit dem Kolbenelement 32b einerseits und dem Reibelement 30b andererseits fest verbunden ist, so ist es durchaus auch möglich, an diesem Verbindungselement zumindest einen Teilbereich der bzw. jeder Reibfläche 97b vorzusehen, beispielsweise in Verbindung mit einem am Reibelement 30b vorgesehenen Teilbereich oder/und einem am Kolbenelement 32b vorgesehenen Teilbereich. Grundsätzlich ist es bei dieser und auch den anderen gezeigten Ausgestaltungsformen möglich, an dieser Baugruppe, also beispielsweise am Reibelement 30b oder/und am Kolbenelement 32b oder/und ggf. einem diese verbindenden Verbindungselement separate Förderorgane, als eigenständige Bauteile vorzusehen, wobei diese Förderorgane dann die Förderelemente mit ihren Förderflächen bereitstellen bzw. bilden.

Um den bei Rotation entstehenden Fluidzirkulationseffekt zu fördern, ist es vorteilhaft, neben den in ihrer Gesamtheit als Pumpe wirksamen Förderelementen 96b auch als so genannte Turbine wirksame Baugruppen bereitzustellen, die dann mit anderer, im Allgemeinen geringerer Drehzahl rotieren. Eine derartige als Turbine wirksame Baugruppe ist beispielsweise die Torsionsschwingungsdämpferanordnung 44b, die im Schlupfzustand, also bei schneller drehendem Gehäuse 12b, als Abbremsbaugruppe wirksam ist. Auch das Reibelement 38b, welches mit der gleichen Drehzahl rotiert, wie die Torsionsschwingungsdämpferanordnung 44b, kann als derartiges Abbremselement wirksam sein. Hierzu können in den daran vorgesehenen Reibbelägen radial sich erstreckende Kanäle vorgesehen sein, durch welche hindurch unter entsprechender Umfangsverzögerung das durch die Förderelemente 96b geförderte Fluid strömt.

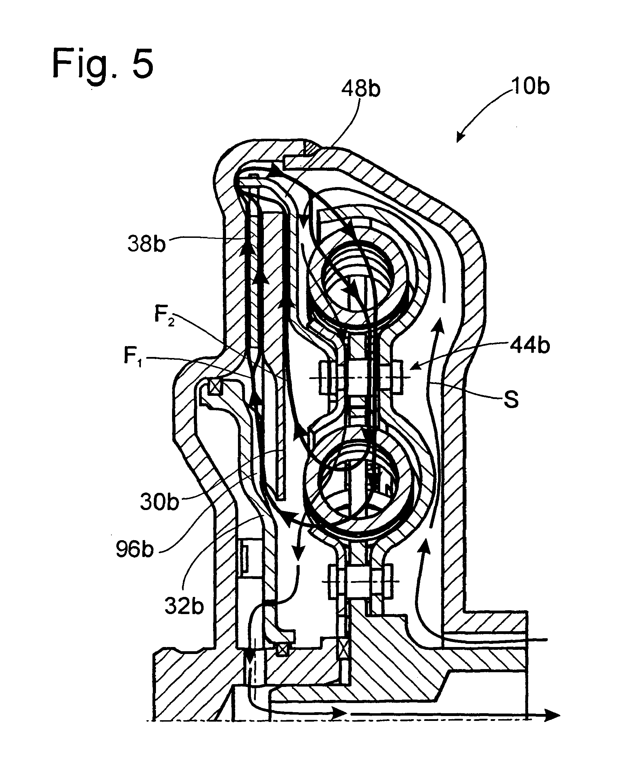

In der schematischen Darstellung der Fig. 5 erkennt man die im inneren dieser nasslaufenden Kupplungsanordnung 10b auftretenden Fluidströmungen bzw. Fluidzirkulationen. Man erkennt zunächst eine Strömung S, welche den beispielsweise durch eine in einem Getriebe angeordnete Fluid- bzw. Ölpumpe bewirkten Fluidstrom in das Gehäuse und aus dem Gehäuse heraus repräsentiert. Diese zum kontinuierlichen Fluidaustausch und mithin auch zur kontinuierlichen Wärmeabfuhr beitragende Fluidströmung weist beispielsweise eine Strömungsrate von etwa 8 l/min auf. Bei Relativdrehung zwischen dem Eingangsbereich, also dem Gehäuse und allen damit rotierenden Baugruppen und dem Ausgangsbereich, also im Wesentlichen der Torsionsschwingungsdämpferanordnung und allen damit drehfesten Baugruppen, entsteht eine auch die Reibflächen bzw. das Reibelement umströmende erste Fluidzirkulation F₁, welche voran bzw. nach radial außen gefördert wird durch die im Angrenzungsbereich des Kolbenelements 32b und des Reibelements 30b bereitgestellten Förderelemente 96b und im Wesentlichen abgebremst wird durch die Torsionsschwingungsdämpferanordnung 44b bzw. die im Reibelement 38b gebildeten Kanäle. Abhängig von der Relativdrehzahl zwischen dem Eingangsbereich und dem Ausgangsbereich kann hier eine die reibend miteinander in Wechselwirkung tretenden Oberflächen sehr effizient kühlende Fluidzirkulation mit einer Strömungsrate von bis zu 177 l/min oder dem 20-fachen der Strömungsrate der Strömung S entstehen. Eine zweite Fluidzirkulation F₂ entsteht im Wesentlichen im Übergangsbereich zwischen dem Reibelement 30b und der Kopplungsscheibe 48b. Diese Fluidzirkulation F₂ kann dadurch erzeugt werden, dass am Reibelement 30 nicht nur die in der Fig. 4 erkennbaren Förderflächen 97b bzw. Bereiche derselben ausgebildet sind. Vielmehr ist es möglich, dieses in seinem radial inneren Bereich onduliert auszugestalten, so dass sich einerseits die zur Fluidzirkulation F₁ führenden und in der Fig. 4 erkennbaren Förderflächen 97b ergeben, und andererseits in der Fig. 4 nicht erkennbare an der anderen axialen Seite des Reibelements 30b wirksame Förderflächen vorhanden sind. Diese fördern das Fluid im Volumenbereich zwischen dem Reibelement 30b und der Torsionsschwingungsdämpferanordnung 44b nach radial außen. Ein weiterer Effekt, der zum Entstehen der Fluidzirkulation F₂ beiträgt, ist ein Saugpumpeneffekt, den die Fluidzirkulation F₁ dort erzeugt, wo in der Fig. 5 die beiden Teilströme der Fluidzirkulation F₁ sich radial außerhalb der reibend miteinander in Wechselwirkung tretenden Oberflächen wieder vereinigen. Die Fluidzirkulation F₂ kann eine Strömungsrate von bis zu 155 l/min oder dem 15-fachen der Strömungsrate der Strömung S aufweisen. Unterstützt werden könnte diese zweite Fluidzirkulation F₂ durch an der der Torsionsschwingungsdämpferanordnung 44b zugewandten Seite des Reibelements 30b zusätzlich vorgesehene Förderelemente, beispielsweise bereitgestellt an an dem Reibelement 30b als separate Bauteile vorgesehenen Förderorganen.

Die Stärke der jeweiligen Fluidzirkulation kann, je nach Bedarf, selbstverständlich durch die Anzahl und Größe der wirksamen Förderelemente eingestellt werden, ebenso wie durch deren Geometrie, im Wesentlichen also die Geometrie der Förderflächen 97b. Je nachdem, wie groß der Bedarf an Förderflächen ist, kann dann auch die Auswahl getroffen werden, wo die Förderelemente vorgesehen sein sollen. Hierzu kann also allein das Kolbenelement 32b, allein das Reibelement 30b, allein ein diese beiden Elemente verbindendes Verbindungselement oder eine Kombination dieser Elemente jeweils genutzt werden, um die Förderflächen bereitzustellen. Auch das Gehäuse kann zum Bereitstellen entsprechender Förderflächen genutzt werden. Dabei ist zu berücksichtigen, dass auch das Gehäuse mit Eingangsdrehzahl rotiert, also einer Drehzahl, die insbesondere im Schlupfzustand größer ist, als die Drehzahl der als Abbremselemente bzw. Turbinen wirksamen Baugruppen. Hierzu könnten an geeigneter Positionierung an der Innenseite des Gehäuses zusätzliche Förderorgane vorgesehen sein oder durch entsprechende Formgebung des Gehäuses für das Bereitstellen der Förderelemente mit den entsprechenden Förderflächen gesorgt werden. Im Allgemeinen hat es sich als vorteilhaft erwiesen, wenn die Geometrie bzw. auch die Anzahl der Förderflächen so gewählt sind, dass bei einer Antriebsdrehzahl, also einer Drehzahl des Gehäuses, von etwa 2.000 U/min und einer Abtriebsdrehzahl von etwa 0 U/min, also einem Drehzahlverhältnis Abtriebsdrehzahl/Antriebsdrehzahl von etwa 0, der durch die interne Fluidzirkulation generierte Volumenstrom mindestens doppelt so groß ist, als der zum Fluidaustausch dienende Volumenstrom, in der Fig. 5 also die Strömung S.

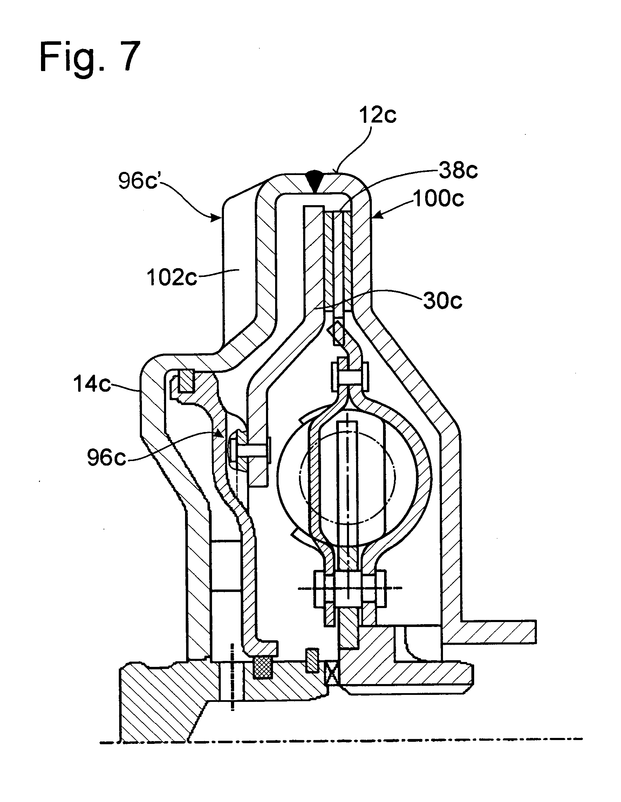

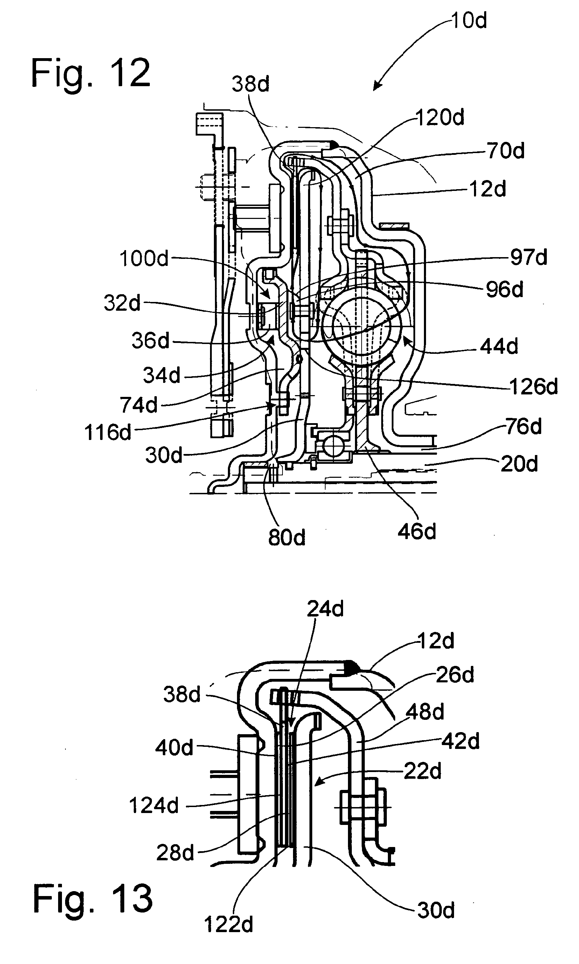

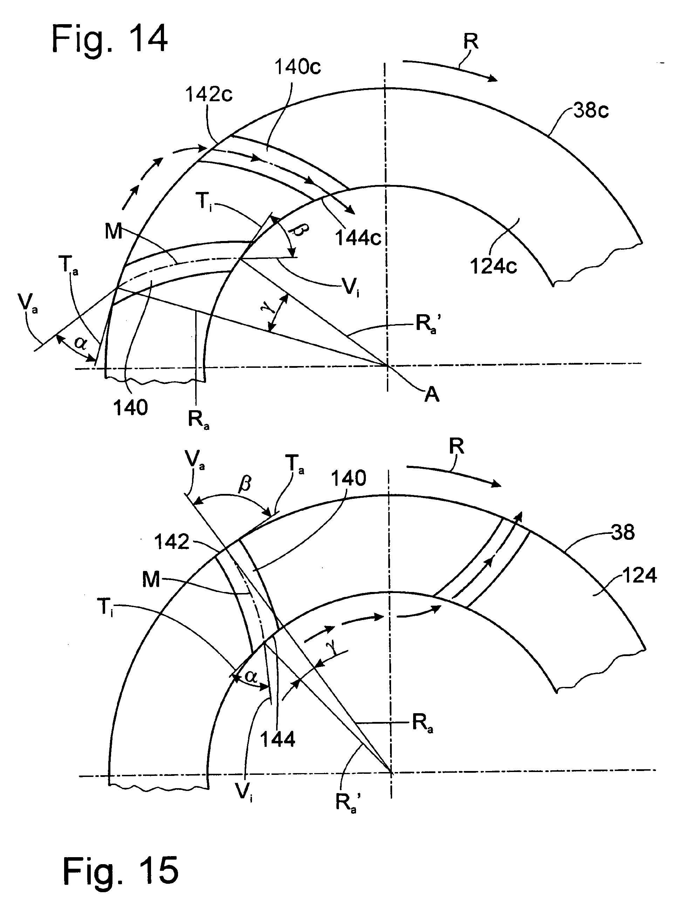

Die Stärke der Fluidzirkulation kann auch durch die Ausgestaltung beispielsweise des in den Figuren erkennbaren Reibelements 38 (in Fig. 1), 38a (in Fig. 2), 38b (in Fig. 4), 38 c (in der nachfolgend noch erläuterten Fig. 7) bzw. 38d (in der nachfolgend noch erläuterten Fig. 12) beeinflusst werden. Dies wird nachfolgend mit Bezug auf die in den Fig. 14 und 15 dargestellten Reibelemente erläutert.

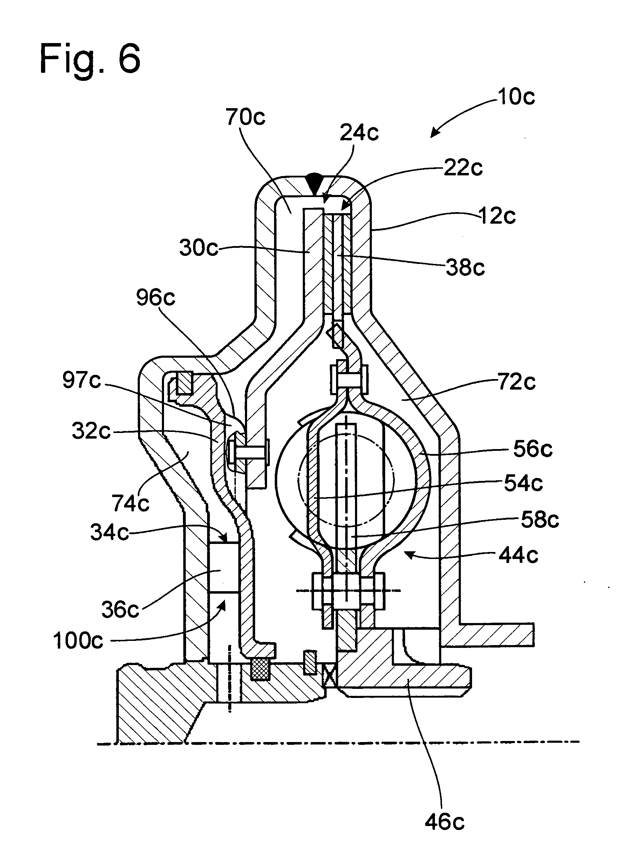

Die Fig. 14 zeigt in axialer Ansicht ein Reibelement 38c, das an einer oder beiden Seiten einen Reibbelag 124c trägt. Dieses Reibelement 38c ist für eine Kupplungsanordnung vorgesehen, die unter dem durch Fliehkraft generierten Fluiddruck in Richtung Schließen vorgespannt wird. Beispiele hierfür sind in den nachfolgend noch erläuterten Fig. 6, 7, 8 und 9 gezeigt.

Man erkennt, dass in dem Reibbelag 124c diesen radial durchsetzende Kanäle 140c gebildet sind, die beispielsweise leicht gekrümmt verlaufen können. Der radial äußere Öffnungsbereich 142c ist bezüglich des radial inneren Öffnungsbereichs 144c und bezogen auf die Rotationsrichtung R des Reibelements 38c zurückversetzt, also in Umfangsrichtung nachlaufend angeordnet. Dabei ist ein Winkel α zwischen einer am Außenumfang des Reibelements 38c vorhandenen Tangentenlinie Tₐ und einer geradlinigen Verlängerung Vₐ der Mittenlinie M am äußeren Öffnungsbereich 142c kleiner als 90°, vorzugsweise kleiner als 60° und, wie die Fig. 14 dies zeigt, entgegen der Drehrichtung R ausgerichtet. Dies bedeutet, dass die Verlängerungslinie Vₐ bezüglich der Radiallinie Rₐ entgegen der Drehrichtung R geneigt verläuft.

Ein Winkel β, der zwischen einer inneren Tangentenlinie Tᵢ und einer inneren Verlängerungslinie Vᵢ eingeschlossen ist, ist im Bereich von, z.B. auch kleiner als 90°, jedoch nur geringfügig kleiner, also beispielsweise im Bereich zwischen 90° und 80°. Es kann somit erreicht werden, dass das dort austretende Fluid im Austrittsbereich im Wesentlichen keine Umlenkung mehr erfährt und nahezu exakt nach radial innen ausströmt. Der Winkel β könnte auch geringfügig größer als 90° sein.

Der Winkel γ, welcher zwischen der zum Mittenpunkt - bezogen auf die Umfangserstreckung - des äußeren Öffnungsbereichs 142c führenden Radiallinie Rₐ und der entsprechenden Radiallinie Rₐ' gebildet ist, die zum Mittenpunkt - bezogen auf die Umfangserstreckung - des inneren Öffnungsbereichs 144c führt, ist größer als 0°, beispielsweise im Bereich von 10° bis 30°.

Mit einer derartigen Ausgestaltung wird erreicht, dass Strömungsablösezonen innerhalb der Kanäle 140c vermieden werden. Die Folge davon ist ein höherer Volumenstrom bei gleicher Strömungsquerschnittsfläche und mithin eine bessere Abfuhr der in diesem entstehenden Wärme.

Die Fig. 15 zeigt die Ausgestaltung eines Reibelements 38 für eine unter Fliehkrafteinwirkung in Richtung Öffnen vorgespannte oder belastete Kupplungsanordnung. Derartige Varianten sind in den Fig. 1, 2, 4, 6, 10, 11 und 12 bzw. 13 gezeigt. Man erkennt hier, dass die Strömungskanäle 140 ebenfalls leicht gekrümmt verlaufen und in der Drehrichtung mit ihrem radial äußeren Öffnungsbereich 142 dem jeweiligen radial inneren Öffnungsbereich 144 voranlaufen. Die Orientierung der Kanäle 140 ist derart, dass der Winkel β zwischen der äußeren Tangentenlinie Tₐ und der Verlängerung V_{A} der Mittenlinie M im radial äußeren Bereich bei etwa 90° liegt, also beispielsweise im Bereich von 80° bis 100° liegt, um sicherzustellen, dass das nunmehr nach radial außen strömende Fluid im Wesentlichen ohne Umlenkung aus den Kanälen 140 austreten kann. Der nunmehr am inneren Öffnungsbereich 144 gebildete Winkel α zwischen der inneren Tangentenlinie Tᵢ und der inneren Verlängerungslinie Vᵢ der Mittellinie M liegt in einem Bereich von deutlich unter 90°, beispielsweise unter 60°. Der Winkel γ zwischen der Radiallinie Rₐ und der in Drehrichtung zurückversetzten Radiallinie Ra' ist auch hier größer 0°, beispielsweise im Bereich von 10° bis 30°.

Mit dieser Ausgestaltung des Reibelements 38 bzw. des daran vorgesehenen Reibbelags 124 oder ggf. von zwei an beiden axialen Seiten jeweils vorgesehenen Reibbelägen kann wiederum unter Vermeidung einer Strömungsablösung im Inneren der Kanäle 140 eine höhere Strömungsrate und mithin ein verstärkter Kühleffekt erhalten werden.

Eine weitere Ausgestaltungsform einer nasslaufenden Kupplungsanordnung ist in Fig. 6 gezeigt. Auch hier sind Komponenten bzw. Baugruppen, welche vorangehend beschriebenen Komponenten bzw. Baugruppen hinsichtlich Aufbau bzw. Funktion entsprechen, mit dem gleichen Bezugszeichen unter Hinzufügung eines Anhangs "c" bezeichnet.

Zunächst erkennt man in Fig. 6, dass die Torsionsschwingungsdämpferanordnung 44c einreihig ausgebildet ist, also zwei einen Eingangsbereich bereitstellende und mit dem Reibelement 38c durch Verzahnungseingriff gekoppelte Deckscheibenelemente 54c, 56c sowie ein Zentralscheibenelement 58c als Ausgangsbereich aufweist, der mit der Abtriebsnabe 46c fest verbunden ist. Man erkennt weiter, dass die Torsionsschwingungsdämpferanordnung 44c und die reibend miteinander in Wechselwirkung tretenden Flächenbereiche im selben axialen Bereich, jedoch radial gestaffelt angeordnet sind. Dies führt zu einer axial sehr kurz bauenden Bauweise. Das Reibelement 30c greift von dem Bereich seiner Anbindung an das Kolbenelement 32c nach radial außen in einen axial schmäler gehaltenen ringartigen Bereich des Gehäuses 12c, in welchem auch das Reibelement 38c mit den daran vorgesehenen Reibbelägen aufgenommen ist.

Im Bereich der Verbindung des Kolbenelements 32c mit dem Reibelement 30c sind in diesem Ausgestaltungsbeispiel die Förderelemente 96c mit ihren Förderflächen 97c am Kolbenelement 32c beispielsweise durch entsprechende axiale Ausformungen bereitgestellt. Im Bereich der axialen Ausformungen können dann diese beiden Teile durch Nietverbindung fest miteinander verbunden sein.

Bei der Ausgestaltungsform der Fig. 6 weist das Reibelement 30c seine in Wechselwirkung mit dem Reibelement 38c tretende Oberfläche an seiner der Torsionsschwingungsdämpferanordnung 44c zugewandten bzw. vom zweiten Raumbereich 74c abgewandten Seite auf. Dies bedeutet, dass zum Herstellen des Reibeingriffs das Reibelement 30c zusammen mit dem Kolbenelement 32c in der Darstellung der Fig. 6 nach rechts, also in Richtung auf die Torsionsschwingungsdämpferanordnung 44c zu zu bewegen ist. Diese Bewegung kann dadurch erlangt werden, dass der Fluiddruck im zweiten Raumbereich 74c durch entsprechende Fluidzufuhr bezüglich des Fluiddrucks im ersten Raumbereich 72c erhöht wird. Da der zweite Raumbereich 74c im Wesentlichen keine voluminösen Baugruppen enthält und somit ein deutlich kleineres Volumen aufweist, als der erste Raumbereich 72c, und da darüber hinaus der zweite Raumbereich 74c mit seinem Gesamtvolumen radial deutlich weiter innen liegt, als der erste Raumbereich 72c, ist es bei dieser Ausgestaltungsvariante möglich, Einkuppelvorgänge bzw. Befüllvorgänge insbesondere in einer Startphase, also nach längerem Stillstand des Systems wesentlich schneller durchzuführen. Es ist nämlich dann lediglich erforderlich, den möglicherweise teilweise leer gelaufenen zweiten Raumbereich 74c mit Fluid zu füllen bzw. einen entsprechenden Fluiddruck aufzubauen, während bei den vorangehend dargestellten Ausgestaltungsformen dies beim ersten und deutlich größeren, sich auch radial außerhalb des Kolbenelements erstreckenden ersten Raumbereich erforderlich ist. Das in den zweiten Raumbereich 74c eingeleitete Fluid unterliegt einer Fliehkraftbelastung, die zu einem das Kolbenelement 32c beaufschlagenden Druck führt, dem ein entsprechender fliehkraftbedingter Fluiddruck im ersten Raumbereich 72c auf Grund nicht ausreichender Befüllung desselben nach teilweise leergelaufenem Gehäuse 12c entgegenwirkt. Dies bedeutet, dass die im Rotationszustand wirkende Fliehkraft das Schließen bzw. Einrücken der Kupplung unterstützt, wodurch diese insbesondere im Anfangsstadium des Betriebs schneller regelbar wird. Dies ist unabhängig davon, ob es sich bei der Kupplungsanordnung um einen Zwei-Leitungs-Typ, einen Drei-Leitungs-Typ oder einen anderen Typ handelt.

Ein weiterer Vorteil dieser Ausgestaltungsform liegt darin, dass die als Turbine bzw. Abbremselement wirksamen, langsamer rotierenden Baugruppen, insbesondere die Torsionsschwingungsdämpferanordnung 44c bzw. auch das Reibelement 38c, den durch die Förderelemente 96c generierten Fluidstrom, also die vorangehend beschriebene Fluidzirkulation F₁, weniger stark drosseln.

Auch bei dieser Ausgestaltungsform können selbstverständlich die Förderelemente 96c alternativ oder zusätzlich mit entsprechenden Förderflächen 97c oder Teilbereichen davon am Reibelement 30c oder daran bzw. am Anpresselement 32c zusätzlich vorgesehenen Förderorganen realisiert sein.

Eine weitere Variationsmöglichkeit ist in Fig. 7 erkennbar. Neben den im Bereich des Anpresselements vorgesehenen Förderelementen 96c sind hier am radial äußeren ringartigen Bereich 100c des Gehäuses 12c, in welchem auch das Reibelement 38c und der damit in Reibwechselwirkung tretende Bereich des Reibelements 30c angeordnet sind, Förderelemente 96c' als integraler Bestandteil des Gehäuses 12c, insbesondere der motorseitigen Gehäuseschale 14c vorgesehen. Diese Förderelemente 96c' sind gebildet durch in Umfangsrichtung aufeinander folgende pumpenschaufelartige Oberflächen bereitstellende Ausformungen 102c der motorseitigen Gehäuseschale 14c. Diese unterstützen die durch die Förderelemente 96c bereits erzeugte Fluidzirkulation bzw. sind auch in der Lage, diese alleine zu erzeugen.

Es sei auch hier noch einmal betont, dass diese Förderelemente 96c' nicht notwendigerweise durch entsprechende Formgebung des Gehäuses 12c, sondern durch daran vorgesehene zusätzliche Förderorgane mit entsprechenden die Förderflächen bereitstellenden Förderelementen realisiert sein können.

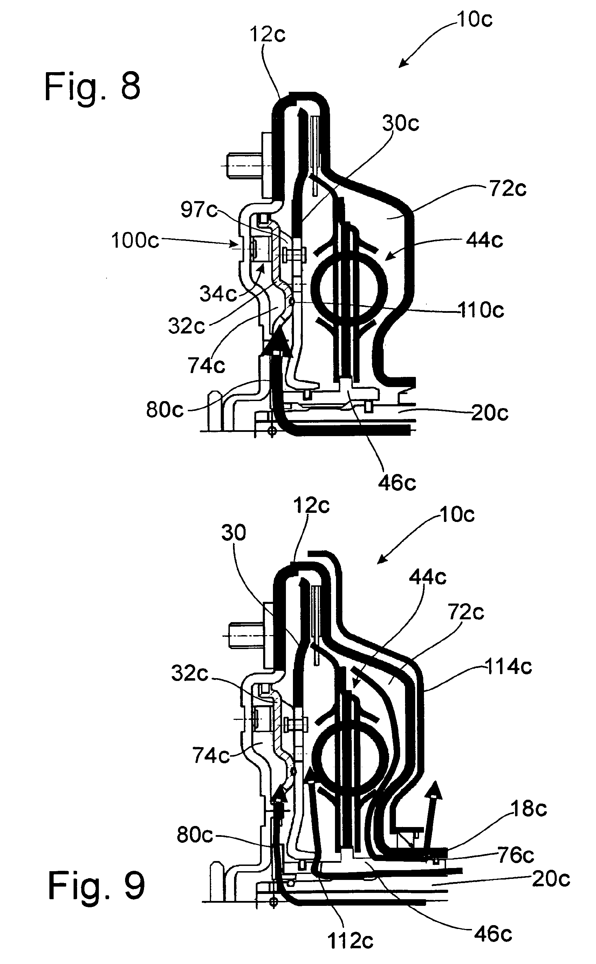

Vorangehend sind Ausgestaltungsformen einer nasslaufenden Kupplungsanordnung jeweils im Wesentlichen mit Bezug auf die Ausgestaltung als so genannte Zwei-Leitungs-Systeme beschrieben worden, bei welchen für den ersten Raumbereich und den zweiten Raumbereich jeweils ein Fluidströmungsweg vorgesehen ist oder ggf. nur für den zweiten Raumbereich zwei Fluidströmungswege vorgesehen sind zur Zufuhr bzw. Abfuhr von Fluid in der erforderlichen Strömungsrichtung. Es ist selbstverständlich, dass die verschiedenen konstruktiven Varianten insbesondere auch hinsichtlich der Erzeugung der internen Fluidzirkulation auch bei anderen Systemen eingesetzt werden können. So zeigt beispielsweise die Fig. 8 anhand einer im konstruktiven Aufbau im Wesentlichen der Fig. 6 entsprechenden Ausgestaltungsvariante den Aufbau nach einem Ein-Leitungs-System. Hier ist also nur ein auch durch die Getriebeeingangswelle 20c hindurch verlaufender und anhand eines dick eingetragenen Pfeils erkennbarer Fluidströmungsweg 80c in den zweiten Raumbereich 74c vorhanden. Es gibt keinen dem ersten Raumbereich 72c zugeordneten Fluidstömungsweg, der aktiv zum Erzeugen einer externen Fluidzirkulation, also der Strömung S in Fig. 5, genutzt werden könnte. Die Fluidversorgung des ersten Fluidraums 72c kann beispielsweise durch eine Öffnung bzw. Leckage im Bereich des Kolbenelements 32c bzw. des Reibelements 30c erfolgen oder durch eine Verbindung mit einem Getriebe bzw. einem Getriebeölsumpf. Durch Erhöhen des Fluiddrucks im zweiten Raumbereich 74c kann das Reibelement 30c zum Einrücken der Kupplungsanordnung 10c verschoben werden, was bei dieser Ausgestaltungsform dadurch unterstützt wird, dass das im zweiten Raumbereich 74c vorhandene Fluid im Rotationsbetrieb einer Fliehkraft unterliegt, welche einen das Kolbenelement 32c mit dem Reibelement 30c in Richtung Einrücken belastenden Druck generiert.

In der Fig. 8 erkennt man einen weiteren Variationsaspekt, der selbstverständlich auch bei den anderen Ausgestaltungsformen realisiert sein kann. Hier ist der zweite Raumbereich 74c nicht nur durch das Kolbenelement 30c begrenzt, sondern zusätzlich auch, und zwar im radial inneren Bereich, durch das sich bis nach radial innen erstreckende Reibelement 32c. Dieses ist im dargestellten Beispiel bezüglich des Außenumfangs der Abtriebsnabe 46c durch Zwischenlagerung eines Dichtungselements fluiddicht, jedoch relativ drehbar angeschlossen, könnte selbstverständlich aber auch bezüglich des Außenumfangs der Getriebeeingangswelle 20c oder einer entsprechenden Abtriebswelle fluiddicht angeschlossen sein. Das Kolbenelement 32c ist nur radial außen axial bewegbar fluiddicht bezüglich des Gehäuses 12c angeschlossen. Das Kolbenelement 32c und das Reibelement 30c sind durch eine Nietverbindung miteinander fest verbunden, wobei eine Dichtformation 110c vorgesehen sein kann, um im Angrenzungsbereich dieser beiden Elemente einen fluiddichten Abschluss des zweiten Raumbereichs 74c zu erlangen. Diese Dichtformation 110c kann beispielsweise durch ein zwischengelegtes elastisches Dichtungselement, alternativ aber auch eine Schweißnaht, beispielsweise Laserschweißnaht, realisiert sein.

Der Vorteil dieser Ausgestaltungsvariante liegt darin, dass die zum Verschieben des Reibelements 30c generierte Kraft, im Wesentlichen bereitgestellt ist durch die Fluiddruckdifferenz zwischen den beiden Raumbereichen 72c und 74c, nicht ausschließlich auf das Kolbenelement 32c, sondern zum Teil auch direkt auf das Reibelement 30c wirkt und somit die Verbindung zwischen diesen beiden Elementen entlastet wird. Dies ist vor allem bei der Normal-Offen-Ausgestaltung von Vorteil, da dann ein Teil der Schließkraft nicht über die Verbindung des Kolbenelements 32c mit dem Reibelement 30c, sondern direkt auf das Reibelement 30c einwirkt.

Die Fig. 9 zeigt eine weitere Alternative der Fluidversorgung, welche hier als erweiterter 2-Leitungs-Typ ausgebildet ist. Man erkennt wieder den Fluidströmungsweg 80c zum zweiten Raumbereich 74c. Man erkennt weiter den Fluidströmungsweg 76c, der hier aus dem ersten Raumbereich 72c herausführt und man erkennt einen weiteren Fluidströmungsweg 112c, der zwischen der Abtriebswelle 20c, also beispielsweise Getriebeeingangswelle, und der Abtriebsnabe 46c und durch eine oder mehrere Öffnungen in dieser hindurch in den ersten Raumbereich 72c führt, und zwar in einem Bereich axial zwischen der Torsionsschwingungsdämpferanordnung 44c und dem Anpresselement 30c bzw. dem Reibelement 32c. Bei dieser Variante ist zusätzlich ein beispielsweise aus Blech aufgebautes scheibenartiges Dichtelement 114c vorgesehen, welches grundsätzlich der Kontur des Gehäuses 12c folgen kann und im radial inneren Bereich bezüglich der am Gehäuse gebildeten Pumpennabe 18c fluiddicht, jedoch drehbar angeschlossen ist und radial außen beispielsweise an einem Getriebegehäuse oder einer Kupplungsglocke oder dergleichen fluiddicht abschließend getragen ist. Dieses schirmt das Gehäuse 12c bzw. die Kupplungsanordnung 10c bezüglich des über den Fluidströmungsweg 76c aus dem ersten Raumbereich 72c abgeführten Fluids ab. Das über den Fluidströmungsweg 76c abgeleitete Fluid kann dann in einen beispielsweise außerhalb eines Getriebegehäuses gebildeten Nassraum über eine Verbindungsöffnung in einen Getriebesumpf abgeleitet werden.

Eine weitere Variante kann den Aufbau nach dem so genannten Drei-Leitungs-Typ vorsehen, bei welcher der zweite Raumbereich 74c über den Fluidströmungsweg 80c mit Fluid versorgt bzw. von Fluid entleert werden kann. Die Fluidströmungswege 76c, 112c führen zu einem beispielsweise in einem Getriebegehäuse gebildeten Fluidversorgungssystem mit einer Fluidpumpe und einem Fluidsumpf. Ein derartiges Drei-Leitungs-System ist insbesondere bei dem in der Fig. 9 auch erkennbaren Aufbau vorteilhaft, bei welchem unter Fliehkrafteinfluss und Fluidzufuhr in den zweiten Raumbereich 74c die Kupplungsanordnung 10c zum Schließen, also Einrücken neigt.

Es sei hinsichtlich der verschiedenen Fluidversorgungsvarianten noch einmal betont, dass diese grundsätzlich unabhängig sind vom internen Aufbau der Kupplungsanordnung, insbesondere vom Aufbau der Torsionsschwingungsdämpferanordnung, des Kolbenelements und des damit verbundenen Reibelements, so dass selbstverständlich auch die weiteren gezeigten Ausgestaltungsvarianten je nach Bedarf mit dem entsprechenden Fluidversorgungssystemtyp aufgebaut sein kann.

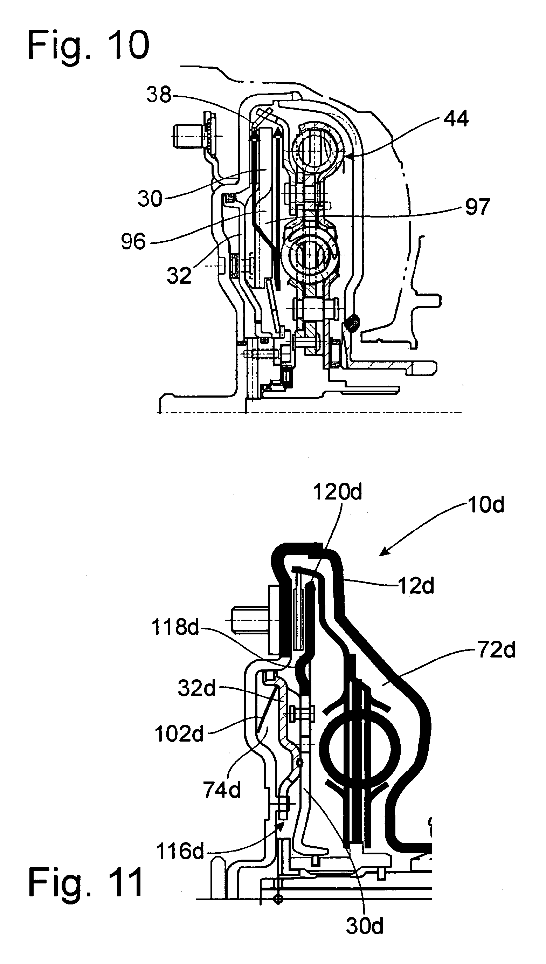

Die Fig. 10 zeigt eine Ausgestaltungsform, die in wesentlichen Bereichen der in Fig. 1 gezeigten Ausgestaltungsform entspricht. Man erkennt die zweireihig ausgebildete Torsionsschwingungsdämpferanordnung 44, das radial innen und radial außen im Wesentlichen fluiddicht und axial bewegbar angeschlossene Kolbenelement 32 und das damit fest verbundene Reibelement 30. Dieses ist beispielsweise wiederum durch Nietverbindung mit dem Kolbenelement 32 verbunden und in seinem radial inneren, keine Reibfläche bereitstellenden Bereich so geformt, dass es in Umfangsrichtung aufeinander folgend eine Mehrzahl von Förderelementen 96 bzw. jeweiligen Förderflächen 97 bereitstellt. Auch hier sind also beispielsweise all diese Förderflächen 97 am Reibelement 32 vorgesehen, wobei dieses in seinem radial inneren Bereich in Umfangsrichtung gewellt bzw. mit axial zueinander versetzt liegenden Bereich ausgebildet sein kann, um diese Förderflächen 97 bereitzustellen. Dies hat zur Folge, dass an beiden axialen Seiten des Reibelements 32 ein jeweiliger Kühlölstrom generiert wird, wie dies in der Fig. 10 durch einen sich teilenden Pfeil veranschaulicht ist. Dies verstärkt die interne Fluidzirkulation und kühlt das Reibelement 32c in seinem radial äußeren Bereich an der von dem Reibelement 38 abgewandten bzw. der Torsionsschwingungsdämpferanordnung 44 zugewandten axialen Seite.

Die Fig. 11 zeigt eine weitere abgewandelte Ausgestaltungsart, bei welcher Komponenten, welche hinsichtlich Aufbau bzw. Funktion vorangehend beschriebenen Komponenten entsprechen, mit dem gleichen Bezugszeichen unter Hinzufügung eines Anhangs "d" bezeichnet sind.

Die Fig. 11 zeigt eine weitere Variation, bei welcher zum Einrücken der Kupplungsanordnung 10d der Fluiddruck im ersten Raumbereich 72d bezüglich des Fluiddrucks im zweiten Raumbereich 74d zu erhöhen ist. Das Kolbenelement 32d ist durch die Tellerfeder 102d in Richtung Ausrücken vorgespannt bzw. axial belastet. Die Drehkopplung zwischen dem Kolbenelement 32d und dem Gehäuse erfolgt durch einen durch Verzahnungsformationen gebildeten Formschlusseingriff 116d am radial inneren Bereich des Kolbenelements 32d. Der zweite Raumbereich 74d ist in seinem radial inneren Bereich wieder durch den radial inneren Abschnitt des Reibelements 30d axial begrenzt. Die Tellerfeder 102d ist an einer axialen Stufe des Kolbenelements 32d im Bereich ihres radial äußeren Umfangs zentriert, was daher vorteilhaft ist, da bei axialer Belastung in diesem Bereich die geringste radiale Größenänderung der Tellerfeder 102d auftritt. Eine derartige Zentrierung der Tellerfeder in ihrem radial äußeren Bereich ist beispielsweise auch bei der Ausgestaltungsform der Fig. 10 erkennbar, wo diese Tellerfeder sich am radial inneren Endbereich des zugeordneten Reibelements abstützt.

Weiter erkennt man in der Fig. 11, dass im Reibelement 30d, das beispielsweise als Blechformteil ausgebildet sein kann, radial innerhalb der daran vorgesehenen Reibfläche eine knickartige axiale Ausformung 118d gebildet ist. Diese erzeugt eine Versteifung des Reibelements 30d. Alternativ oder zusätzlich kann radial außerhalb des reibend wirksamen Flächenbereichs des Reibelements 30d eine axiale Ausformung 120d, beispielsweise in Form eines abgeknickten Bereichs, gebildet sein, so dass auch hier zur Versteifung des Reibelements 30d beigetragen werden kann.

Die in Fig. 12 gezeigte Ausgestaltungsvariante entspricht in Wesentlichen Bereichen der vorangehend mit Bezug auf die Fig. 11 beschriebenen. Man erkennt hier wieder, dass der zweite Raumbereich 74d durch das Kolbenelement 32d und den radial inneren Bereich des Reibelements 30d begrenzt ist. Dieses liegt nunmehr am Außenumfang der als Abtriebswelle wirksamen Getriebeeingangswelle 20d an und ist in seinem radial äußeren Bereich mit der knickartigen axialen Ausformung 120d versehen, um dort eine entsprechende Versteifung zu generieren. Die Drehkopplung zwischen dem Kolbenelement 32d und dem Gehäuse 12d wird im Wesentlichen durch den Formschlusseingriff am radial inneren Endbereich des Kolbenelements 32d generiert.

Man erkennt in der vergrößerten Darstellung der Fig. 13, dass an dem reibend wirksam werdenden Bereich des Reibelements 30d ein Reibbelag 122d vorgesehen ist, welcher die Reibfläche 28d bereitstellt. Dieser liegt die am Reibelement 38d gebildete Reibfläche 42d axial gegenüber, wobei in diesem Bereich das Reibelement 38d keinen Reibbelag trägt bzw. aufweist. An seiner anderen axialen Seite weist das Reibelement 38d einen Reibbelag 124d auf, welcher die Reibfläche 40d bereitstellt, die wiederum in Reibwechselwirkung tritt mit der am Gehäuse 12d gebildeten Reibfläche 26d.

Am Kolbenelement 32d sind die Förderelemente 96d mit ihren jeweiligen Förderflächen 97d vorgesehen, welche bei Rotation des Gehäuses 12d eine Fluidströmung nach radial außen generieren, grundsätzlich also als Pumpe wirksam sind. Diese Förderwirkung kann unterstützt werden durch im Reibbelag 122d des Reibelements 30d gebildete, nach radial außen verlaufende Nuten bzw. Kanäle, die mit ihren Umfangsbegrenzungsflächen ebenfalls als Pumpen wirksam sein können. Das Reibelement 38d kann mit seinem Reibbelag 124d bzw. daran gebildeten Nuten oder Kanälen als Abbrems- bzw. Turbinenelement wirksam sein. Es entsteht damit die in der Fig. 12 erkennbare Fludzirkulation, welche im Bereich des Reibelements 38d sich in zwei Teilströmungen aufteilt und somit die an beiden Seiten des Reibelements 38d entstehende Reibwärme effizient abführen kann. Die Fluidströmung gelangt dabei im Wesentlichen nach radial außen und strömt teilweise zwischen dem Gehäuse 12d und der Torsionsschwingungsdämpferanordnung 44d nach radial innen. Diese ist insbesondere im Bereich der als Dämpferelemente wirksamen Federn offen gestaltet, ermöglicht also einen axialen Durchtritt des zirkulierenden Öls, so dass sich dieser zwischen der Torsionsschwingungsdämpferanordnung 44d und dem Gehäuse 12d strömende Fluidstrom mit einem im Wesentlichen zwischen dem Reibelement 30d und der Torsionsschwingungsdämpferanordnung 44d nach radial innen gelangenden Fluidstrom vereinigen kann und durch eine oder mehrere Öffnungen 126d des ganz nach radial innen geführten Reibelements 30d in Richtung zu den Förderelementen 96d geführt wird. Es sei hier darauf hingewiesen, dass diese für den Fluidstrom offene Ausgestaltung der Torsionsschwingungsdämpferanordnung selbstverständlich auch bei den anderen gezeigten Ausgestaltungsformen, insbesondere auch denjenigen, mit zwei radial gestaffelt liegenden Torsionsschwingungsdämpferbereichen so gewählt sein kann. Diese axial offene Ausgestaltung lässt sich z.B. dadurch erreichen, dass die verschiedenen die Dämpferfedern abstützenden Scheibenelemente dort, wo die Dämpferfedern angeordnet sind, so genannte Federfenster aufweisen.

Es ist darauf hinzuweisen, dass die in der Fig. 13 gezeigte, selbstverständlich aber auch bei den anderen Ausgestaltungsformen realisierbare Anordnung der Reibbeläge auch insofern variiert werden kann, als an dem Reibelement 38d überhaupt kein Reibbelag vorgesehen ist, dieses also im Wesentlichen planare Metall- bzw. Blechscheibe ausgebildet ist. Die beiden Reibbeläge können dann am Reibelement 30d einerseits und am Gehäuse 12d andererseits vorgesehen sein.

Bei den in den Fig. 12 und 13 gezeigten Ausgestaltungsvarianten, selbstverständlich aber auch bei den anderen Ausgestaltungsvarianten, kann das bzw. sofern mehrere vorgesehen sind, jedes der lamellenartig ausgebildeten Reibelemente 38d der zweiten Reibflächenformation 24d in Umfangsrichtung gewellt oder mit tellerartiger, also im Wesentlichen konusartig angestellter Formgebung ausgebildet sein. Dies bringt Vorteile insbesondere hinsichtlich des dadurch generierten Schleppmoments mit sich. Auch wird dadurch eine sehr gute Entkopplung vorn Einregelschwingungen erhalten, ähnlich wie dies bei der Belagsfederung in Kupplungsscheiben von Trockenreibkupplungen der Fall ist. Auch die Modulation des Kupplungsmoments während eines Einkuppelvorgangs wird dadurch ermöglicht. Dies ist vor allem dann von Vorteil, wenn das Gehäuse 12d vollständig mit Fluid gefüllt ist. Auch können dadurch die durch die Drehzahlabhängigkeit des auf das Kolbenelement 32d einwirkenden Schließdrucks generierten Nachteile kompensiert werden. Dies ist dadurch bedingt, dass, wie die verschiedenen Ausgestaltungsformen dies zeigen, das Kolbenelement 32d durch eine Feder oder dergleichen in Richtung Einrücken oder Ausrücken vorgespannt ist, die dieses dann, wenn der zweite Raumbereich 74d drucklos gehalten ist und im Wesentlichen nur der Fliehkrafteinfluss vorhanden ist, am Schließen bzw. Öffnen hindert. Diese Federkraft kann zur Kompensation des so genannten Touch-Point-Kennfeldes verwendet werden, wozu es jedoch erforderlich ist, dass die Vorspannfeder durch das Kolbenelement während eines Einrückvorgangs, d.h. des Aufbaus des Kupplungsmomentes, wirksam werden kann, d.h., der Aufbau des Kupplungsmomentes erfolgt, während noch eine Axialbewegung des Kolbenelements 32d bzw. des Reibelements 30d erfolgt. Vor allem bei öffnenden Systemen, also bei fliehkraftbedingt in Richtung Ausrücken belastetem Kolbenelement 32d kann durch das weitergehende Einfedern der Vorspannfeder, also beispielsweise Tellerfeder 102d in Fig. 11, das fliehkraftbedingt fallende Touch-Point-Kennfeld kompensiert werden. Bei einem schließenden System, also bei in Richtung Einkuppeln vorgespanntem Kolbenelement, bei welchem auch der fliehkraftabhängig generierte Druck insbesondere im zweiten Raumbereich den Schließvorgang unterstützt oder sogar bewirkt, hat eine in Richtung Ausrücken vorspannende Vorspannfeder die Funktion, dafür zu sorgen, dass die Kupplung bis zum Erreichen einer bestimmten unteren Grenzdrehzahl offen gehalten wird, so dass das Fahrzeug nicht selbsttätig anfahren kann.

Abschließend sei noch einmal darauf hingewiesen, dass die in den verschiedenen Ausgestaltungsformen gezeigten technischen Ausführungsmöglichkeiten selbstverständlich miteinander kombiniert werden können. Auch sind Variationen in verschiedenen Bereichen denkbar, wie z.B. die Ausgestaltung des Kolbenelements und des Reibelements in einem integralen Bauteil, beispielsweise hergestellt in einem Gussvorgang oder einem Blechumformungsvorgang. Die verschiedenen Funktionsgruppen, insbesondere die Förderflächen, können dabei beim Herstellungsvorgang, also beim Gießen oder Umformen, mitangeformt werden, können selbstverständlich aber auch nachträglich, beispielsweise in Span abhebender Bearbeitung, erzeugt werden.

## Patentansprüche

1. Kupplungsanordnung, insbesondere für den Antriebsstrang eines Fahrzeugs, umfassend:
- ein mit Fluid gefülltes oder füllbares Gehäuse (12; 12a; 12b; 12c; 12d),
- eine mit dem Gehäuse (12; 12a; 12b; 12c; 12d) um eine Drehachse (A) drehbare erste Reibflächenformation (22; 22a; 22b; 22c; 22d),
- eine mit einem Abtriebselement (46; 46a; 46b; 46c; 46d) um die Drehachse (A) drehbare zweite Reibflächenformation (24; 24a; 24b; 24c; 24d),
- ein mit dem Gehäuse (12; 12a; 12b; 12c; 12d) um die Drehachse (A) drehbares und einen Innenraum (70; 70a; 70b; 70c; 70d) des Gehäuses (12; 12a; 12b; 12c; 12d) in einen ersten Raumbereich (72; 72a; 72b; 72c; 72d) und einen zweiten Raumbereich (74; 74a; 74b; 74c; 74d) teilendes Anpresselement (32; 32a; 32b; 32c; 32d), wobei in Abhängigkeit des Fluiddrucks im ersten Raumbereich (72; 72a; 72b; 72c; 72d) und des Fluiddrucks im zweiten Raumbereich (74; 74a; 74b; 74c; 74d) das Anpresselement (32; 32a; 32b; 32c; 32d) bezüglich des Gehäuses (12; 12a; 12b; 12c; 12d) zum Herstellen und Aufheben eines Reibeingriffs zwischen der ersten Reibflächenformation (22; 22a; 22b; 22c; 22d) und der zweiten Reibflächenformation (24; 24a; 24b; 24c; 24d) bewegbar ist,
- ein Fluidversorgungssystem für den ersten Raumbereich (72; 72a; 72b; 72c; 72d) oder/und den zweiten Raumbereich (74; 74a; 74b; 74c; 74d), umfassend wenigstens einen ersten Fluidströmungsweg (76; 76a; 76b; 76c; 76d) für den ersten Raumbereich (72, 72a; 72b; 72c; 72d) oder/und wenigstens einen zweiten Fluidströmungsweg (80; 80a; 80b; 80c; 80d) für den zweiten Raumbereich (74; 74a; 74b; 74c; 74d), wobei über wenigstens einen Fluidströmungsweg (76, 80; 76a, 80a; 76b, 80b; 76c, 80c; 76d, 80d) dem zugeordneten Raumbereich (72, 74; 72a, 74a; 72b, 74b; 72c, 74c; 72d, 74d) Fluid zuführbar ist und über wenigstens einen Fluidströmungsweg (76, 80; 76a, 80a; 76b, 80b; 76c, 80c; 76d, 80d) von dem zugeordneten Raumbereich (72, 74; 72a, 74a; 72b, 74b; 72c, 74c; 72d, 74d) Fluid abführbar ist,
**dadurch gekennzeichnet, dass** sie wenigstens ein Förderelement (96; 96a; 96b; 96c; 96d) zur Erzeugung einer internen Fluidzirkulation bei in Reibeingriff miteinander stehenden Riebflächen formationen (22, 24; 22a, 24a; 22b, 24b; 22c, 24d; 22d, 24d) aufweist.

2. Kupplungsanordnung nach Anspruch 1,
**dadurch gekennzeichnet, dass** das Fluidversorgungssystem von dem Zwei-Leitungs-Typ ist mit je einem Fluidströmungsweg für den ersten Raumbereich (72; 72a; 72b; 72c; 72d) und den zweiten Raumbereich (74; 74a; 74b; 74c; 74d).

3. Kupplungsanordnung nach Anspruch 1 oder 2,
**dadurch gekennzeichnet, dass** in dem Anpresselement (32; 32a; 32b; 32c) wenigstens eine Durchtrittsöffnung (88; 88a; 88b; 88c) für den Fluidaustausch zwischen dem ersten Raumbereich (72; 72a; 72b; 72c) und dem zweiten Raumbereich (74; 74a; 74b; 74c) vorgesehen ist.

4. Kupplungsanordnung nach Anspruch 1,
**dadurch gekennzeichnet, dass** das Fluidversorgungssystem von dem Drei-Leitungs-Typ ist mit einem Fluidströmungsweg (80c) für den zweiten Raumbereich und zwei Fluidströmungswegen für den ersten Raumbereich (74c).

5. Kupplungsanordnung nach Anspruch 1,
**dadurch gekennzeichnet, dass** das Fluidversorgungssystem von dem Ein-Leitungs-Typ ist mit einem Fluidströmungsweg (80c) für den zweiten Raumbereich (74c).

6. Kupplungsanordnung nach Anspruch 1,
**dadurch gekennzeichnet, dass** das Fluidversorgungssystem von dem erweiterten 2-Leitungs-Typ ist mit einem Fluidströmungsweg (80c) für den zweiten Raumbereich (74c) und einem Fluidzuführweg (112c) und einem Fluidabführweg (76c) für den ersten Raumbereich (72c).

7. Kupplungsanordnung nach einem der Ansprüche 1 bis 6,
**dadurch gekennzeichnet, dass** wenigstens die zweite Reibflächenformation (24; 24a; 24b; 24c; 24d) im ersten Raumbereich (72; 72a; 72b; 72c; 72d) angeordnet ist.

8. Kupplungsanordnung nach einem der Ansprüche 1 bis 7,
**dadurch gekennzeichnet, dass** das Anpresselement (32; 32a; 32b; 32c; 32d) durch eine axial elastische Kopplungsanordnung (34; 34a; 34b; 34c; 34d) mit dem Gehäuse (12; 12a; 12b; 12c; 12d) zur Drehung um die Drehachse (A) gekoppelt ist.

9. Kupplungsanordnung nach Anspruch 8,
**dadurch gekennzeichnet, dass** die Kopplungsanordnungen (34; 34a; 34b; 34c; 34d) eine Mehrzahl von Blattfedern (36; 36a; 36b; 36c; 36d) umfasst.

10. Kupplungsanordnung nach einem der Ansprüche 1 bis 9,
**dadurch gekennzeichnet, dass** dem Anpresselement (32a; 32b) eine Vorspannanordnung (100a; 100b) zugeordnet ist, welche das Anpresselement (32a; 32b) in Richtung Herstellen des Reibeingriffs der ersten Reibflächenformation (22a; 22b) mit der zweiten Reibflächenformation (24a; 24b) vorspannt.

11. Kupplungsanordnung nach einem der Ansprüche 1 bis 10,
**dadurch gekennzeichnet, dass** dem Anpresselement (32; 32c; 32d) eine Vorspannanordnung (100; 100c; 100d) zugeordnet ist, welche das Anpresselement (32; 32c; 32d) in Richtung Aufheben des Reibeingriffs der ersten Reibflächenformation (22; 22c; 22d) mit der zweiten Reibflächenformation (24; 24c; 24d) vorspannt.

12. Kupplungsanordnung nach Anspruch 8 oder 9 und Anspruch 10 oder 11,
**dadurch gekennzeichnet, dass** die Vorspannanordnung (100; 100c; 100d) die axial elastische Kopplungsanordnung (34; 34c; 34d) umfasst.

13. Kupplungsanordnung nach einem der 10 bis 12,
**dadurch gekennzeichnet, dass** die Vorspannanordnung (100a; 100b) eine das Anpresselement (32a; 32b) bezüglich des Gehäuses (12a; 12b) axial vorspannende Töllededereinheit (102a; 102b) umfasst.

14. Kupplungsanordnung nach einem der Ansprüche 1 bis 15,
**dadurch gekennzeichnet, dass** die zweite Reibflächenformation (24; 24a; 24b; 24c; 24d) mit dem Abtriebselement (46; 46a; 46b; 48c; 46d) über eine Torsionsschwingungsdämpferanordnung (44; 44a; 44b; 44c; 44d) zur Drehung um die Drehachse (A) gekoppelt ist.

15. Kupplungsanordnung nach Anspruch 14,
**dadurch gekennzeichnet, dass** die Torsionsschwingungsdämpferanordnung (44; 44a; 44b; 44c; 44d) im ersten Raumbereich (72; 72a; 72b; 72c; 72d) angeordnet ist.

16. Kupplungsanordnung nach Anspruch 14 oder 15,
**dadurch gekennzeichnet, dass** die Torsionsschwingungsdämpferanordnung (44; 44a; 44b) die erste Reibflächenformation (22; 22a; 22b) oder/und die zweite Reibflächenformation (24; 24a; 24b) wenigstens bereichsweise radial überlappt.

17. Kupplungsanordnung nach einem der vorangehenden Ansprüche,
**dadurch gekennzeichnet, dass** in Umfangsrichtung aufeinander folgend eine Mehrzahl von Förderelementen (96; 96a; 96b; 96c; 96d) vorgesehen ist.

18. Kupplungsanordnung nach einem des vorangehenden Ansprüche,
**dadurch gekennzeichnet, dass** wenigstens ein Förderelement (96; 96a; 96b; 96c; 96d) eine mit dem Gehäuse (12; 12a, 12b; 12c; 12d) um die Drehachse (A) drehbare, radial und axial ausgedehnte Förderfläche (97; 97a; 97b; 97c; 97d) umfasst.

19. Kupplungsanordnung nach Anspruch 8 und Anspruch 18,
**dadurch gekennzeichnet, dass** die Förderfläche (97b; 97c; 97d) wenigstens bereichsweise an dem Anpresselement (32b; 32c; 32d) vorgesehen ist.

20. Kupplungsanordnung nach Anspruch 8 und Anspruch 18 oder 19,
**dadurch gekennzeichnet, dass** die zweite Reibflächenformation (24; 24a; 24b) ein mit dem Anpresselement (32; 32a; 32b) verbundenes Reibelement (30; 30a; 30b) umfasst und dass die Förderfläche (97; 97a; 97b) wenigstens bereichsweise an dem Reibelement (30; 30a; 30b) oder/und einem das Reibelement (30; 30a; 30b) mit dem Anpresselement (32; 32a; 32b) verbindenden Zwischenelement vorgesehen ist.

21. Kupplungsanordnung nach Anspruch 20,
**dadurch gekennzeichnet, dass** die Förderfläche (97b) an wenigstens zwei Elementen von Anpresselement (32b), Reibelement (30b) und, sofern vorhanden, Verbindungselement vorgesehen ist.

22. Kupplungsanordnung nach einem der vorangehenden Ansprüche,
**dadurch gekennzeichnet, dass** wenigstens ein Förderelement (96c') einen integralen Bestandteil des Gehäuses (12c) bildet oder/und an einem an dem Gehäuse (12c) festgelegten Förderorgan vorgesehen ist.

23. Kupplungsanordnung nach einem der vorangehenden Ansprüche in Verbindung mit Anspruch 8,
**dadurch gekennzeichnet, dass** das Förderelement (96; 96a; 96b; 96c; 96d) einen integralen Bestandteil des Anpresselements (32; 32a; 32b; 32c; 32d) oder/und eines mit dem Anpresselement (32; 32a; 32b; 32c; 32d) verbundenen Reibelements (30; 30a; 30b; 30c; 30d) der zweiten Reibflächenformation (24; 24a; 24b; 24c; 24d) oder/und eines das Reibelement mit dem Anpresselement verbindenden Zwischenelements bildet oder/und an einem damit fest verbundenen Förderorgan vorgesehen ist.

24. Kupplungsanordnung nach einem der vorangehenden Ansprüche,
**dadurch gekennzeichnet, dass** ein durch die interne Fluidzirkulation erzeugter Fluidstrom bei einer Drehzahl des Gehäuses (12; 12a; 12b; 12c; 12d) im Bereich von 2.000 U/min und einer Drehzahl des Abtriebselements (46; 46a; 46; 46c; 46d) im Bereich von 0 U/min wenigstens das Zweifache eines durch das Fluidversorgungssystem für den ersten Raumbereich (72; 72a; 72b; 72c; 72d) erzeugten Fluidstroms in und aus dem ersten Raumbereich (72; 72a; 72b; 72c; 72d) ist.

25. Kupplungsanordnung nach einem der Ansprüche 1 bis 24,
**dadurch gekennzeichnet, dass** die zweite Reibflächenformation (24c; 24d) ein mit dem Anpresselement (32c; 32d) verbundenes Reibelement (30c; 30d) umfasst und dass der zweite Raumbereich (74c; 74d) durch das Anpresselement (32c; 32d) und das Reibelement (30c; 30d) oder/und ein das Anpresselement (32c; 32d) mit dem Reibelement (30c; 30d) verbindendes Verbindungselement begrenzt ist.

26. Kupplungsanordnung nach einem der Ansprüche 1 bis 25,
**dadurch gekennzeichnet, dass** wenigstens eine Reibflächenformation (22, 24; 22a, 24a; 22b, 24b; 22c, 24c; 22d, 24d) von erster Reibflächenformation (22; 22a; 22b; 22c; 22d) und zweiter Reibflächenformation (24; 24a; 24b; 24c; 24d), vorzugsweise die zweite Reibflächenformation (24; 24a; 24b; 24c; 24d), wenigstens ein axial elastisches Reibelement (38; 38a; 38b; 38c; 38d), vorzugsweise mit gewellter oder/und tellerartiger Formgebung, umfasst.

27. Kupplungsanordnung nach einem der Ansprüche 1 bis 26,
**dadurch gekennzeichnet, dass** wenigstens eine Reibflächenformation von erster Reibflächenformation (22; 22a; 22b; 22c; 22d) und zweiter Reibflächenformation (24; 24a; 24c; 24d) wenigstens ein Reibelement (38; 38a; 38b; 38c; 38d) mit wenigstens einem eine Reibfläche (40, 42; 40d, 28d) bereitstellenden Reibbelag umfasst, und dass in wenigstens einem Reibbelag wenigstens eine Öffnung für den Durchtritt von Fluid vorgesehen ist.

28. Kupplungsanordnung nach einem der vorangehenden Ansprüche,
**dadurch gekennzeichnet, dass** das Anpresselement (32; 32a) wenigstens eine Öffnung (88; 88a) zur Zufuhr von Fluid in den Bereich der Reibflächenformationen (22, 24; 22a, 24a) aufweist.

29. Kupplungsanordnung nach einem der vorangehenden Ansprüche,
**dadurch gekennzeichnet, dass** wenigstens eine Reibflächenformation von erster Reibflächenformation (22; 22a; 22b; 22c; 22d) und zweiter Reibflächenformation (24; 24a; 24b; 24c; 24d) eine Mehrzahl von Reibelementen (38; 38a) umfasst.

30. Kupplunganordnung nach einem der vorangehenden Ansprüche,
**dadurch gekennzeichnet, dass** das Volumen des ersten Raumbereichs (72c) größer ist als das Volumen des zweiten Raumbereichs (74c) und dass zum Herstellen des Reibeingriffs der Reibflächenformationen (22c, 24c) dem zweiten Raumbereich (74c) Fluid über den zweiten Fluidströmungsweg (80c) zuführbar ist.

31. Antriebssystem für ein Fahrzeug, umfassend ein Antriebsaggregat, ein Automatikgetriebe und eine Kupplungsanordnung (10; 10a; 10b; 10c; 10d) nach einem der vorangehenden Ansprüche im Drehmomentübertragungsweg zwischen dem Antriebsaggregat und dem Automatikgetriebe.

32. Antriebssystem für ein Fahrzeug nach Anspruch 31 und Anspruch 10,
**dadurch gekennzeichnet, dass** ein durch die Vorspannwirkung der Vorspannanordnung (100a; 100b) generierbares Kupplungsmoment größer ist als ein maximales Antriebsdrehmoment des Antriebsaggregats.

33. Antriebssystem nach Anspruch 31 und Anspruch 10,
**dadurch gekennzeichnet, dass** ein durch die Vorspannwirkung der Vorspannanordnung (100a; 100b) generierbares Kupplungsmoment kleiner ist als ein maximales Antriebsdrehmoment des Antriebsaggregats.

34. Antriebssystem nach Anspruch 33 oder Anspruch 31 in Verbindung mit Anspruch 11,
**dadurch gekennzeichnet, dass** in einem Fahrzustand des Antriebssystems ein Fluiddifferenzdruck zwischen dem ersten Raumbereich (72; 72a; 72b; 72c; 72d) und dem zweiten Raumbereich (74; 74a; 74b; 74c; 74d) derart eingestellt wird, dass das Kupplungsmoment der Kupplungsanordnung (10; 10a; 10b; 10c; 10d) einen vorbestimmten Sicherheitsabstand über dem aktuellen Antriebsdrehmoment des Antriebsaggregats liegt.

35. Antriebssystem nach Anspruch 34,
**dadurch gekennzeichnet, dass** der vorbestimmte Sicherheitsabstand im Bereich von 5 % bis 30 %, vorzugsweise 10 % bis 20 %, des aktuellen Antriebsdrehmoments des Antriebsaggregats liegt.

36. Antriebssystem nach einem der Ansprüche 31 bis 35,
**dadurch gekennzeichnet, dass** ein Federelement (102a; 102b) vorgesehen ist, wobei das Federelement (102a; 102b) auf das Anpresselement (32a; 32b) eine zum Übertragen zumindest eines Teils eines maximalen Motordrehmomentes ausreichende Kraft ausübt.

## Claims

1. Coupling arrangement, in particular for the drive train of a vehicle comprising:
- a housing (12; 12a; 12b; 12c; 12d) that is filled or can be filled with a fluid,
- a first formation of friction surfaces (22; 22a; 22b; 22c; 22d) that can rotate with the housing (12; 12a; 12b; 12c; 12d) about a rotational axis (A),
- a second formation of friction surfaces (24; 24a; 24b; 24c; 24d)that can rotate with the output drive element (46; 46a; 46b; 46c; 46d) about the rotational axis (A),
- a pressing-on element (32; 32a; 32b; 32c; 32d)that can rotate with the housing (12; 12a; 12b; 12c; 12d) about the rotational axis (A) and separates an inner chamber (70; 70a; 70b; 70c; 70d) of the housing (12; 12a; 12b; 12c; 12d) into a first chamber region (72; 72a; 72b; 72c; 72d) and a second chamber region (74; 74a; 74b; 74c; 74d), wherein in dependence upon the fluid pressure in the first chamber region (72; 72a; 72b; 72c; 72d) and the fluid pressure in the second chamber region (74; 74a; 74b; 74c; 74d)the pressing-on element (32; 32a; 32b; 32c; 32d)can be moved with respect to the housing (12; 12a; 12b; 12c; 12d)in order to produce and remove a frictional engagement between the first formation of friction surfaces (22; 22a; 22b; 22c; 22d) and the second formation of friction surfaces (24; 24a; 24b; 24c; 24d),
- a fluid supply system for the first chamber region (72; 72a; 72b; 72c; 72d) or/and the second chamber region (74; 74a; 74b; 74c; 74d) comprising at least one first fluid flow path (76; 76a; 76b; 76c; 76d) for the first chamber region (72; 72a; 72b; 72c; 72d) or/and at least one second fluid flow path (80; 80a; 80b; 80c; 80d) for the second chamber region (74; 74a; 74b; 74c; 74d) wherein by way of at least one fluid flow path (76, 80; 76a, 80a; 76b, 80b; 76c, 80c; 76d, 80d) fluid can be supplied to the allocated chamber region (72, 74; 72a, 74a; 72b, 74b; 72c, 74c; 72d, 74d) and by way of at least one fluid flow path (76, 80; 76a, 80a; 76b, 80b; 76c, 80c; 76d, 80d) fluid can be discharged from the allocated chamber region (72, 74; 72a, 74a; 72b, 74b; 72c, 74c; 72d, 74d),
**characterized in that** it comprises at least one conveying element (96; 96a; 96b; 96c; 96d) in order to generate an internal fluid circulation when the formation of friction surfaces (22, 24; 22a, 24a; 22b, 24b; 22c, 24c; 22d, 24d) are in mutual frictional engagement.

2. Coupling arrangement according to Claim 1,
**characterized in that** the fluid supply system is of the two-line type comprising a respective fluid flow path for the first chamber region (72; 72a; 72b; 72c; 72d) and the second chamber region (74; 74a; 74b; 74c; 74d).

3. Coupling arrangement according to Claim 1 or 2,
**characterized in that** in the pressing-on element (32; 32a; 32b; 32c) at least one through-going orifice (88; 88a; 88b; 88c) is provided for the exchange of fluid between the first chamber region (72; 72a; 72b; 72c) and the second chamber region (74; 74a; 74b; 74c).

4. Coupling arrangement according to Claim 1,
**characterized in that** the fluid supply system is of the three-line type comprising a fluid flow path (80c) for the second chamber region and two fluid flow paths for the first chamber region (72c).

5. Coupling arrangement according to Claim 1,
**characterized in that** the fluid supply system is of the one-line type comprising a fluid flow path (80c) for the second chamber region (74c).

6. Coupling arrangement according to Claim 1,
**characterized in that** the fluid supply system is of the expanded two-line type comprising a fluid flow path (80c) for the second chamber region (74c) and a fluid delivery path (112c) and a fluid discharge path (76c) for the first chamber region (72c).

7. Coupling arrangement according to any one of Claims 1 to 6,
**characterized in that** at least the second formation of friction surfaces (24; 24a; 24b; 24c; 24d) is arranged in the first chamber region (72; 72a; 72b; 72c; 72d).

8. Coupling arrangement according to any one of Claims 1 to 7,
**characterized in that** the pressing-on element (32; 32a; 32b; 32c; 32d) is coupled by means of an axially elastic coupling arrangement (34; 34a; 34b; 34c; 34d) to the housing (12; 12a; 12b; 12c; 12d) in order to rotate about the rotational axis (A).

9. Coupling arrangement according to Claim 8,
**characterized in that** the coupling arrangements (34; 34a; 34b; 34c; 34d) comprise a plurality of leaf springs (36; 36a; 36b; 36c; 36d).

10. Coupling arrangement according to any one of Claims 1 to 9,
**characterized in that** a pre-stressing arrangement (100a; 100b) is allocated to the pressing-on element (32a; 32b), which pre-stressing arrangement pre-stresses the pressing-on element (32a; 32b) in the direction for producing the frictional engagement of the first formation of friction surfaces (22a; 22b) with the second formation of friction surfaces (24a; 24b).

11. Coupling arrangement according to any one of Claims 1 to 10,
**characterized in that** a pre-stressing arrangement (100; 100c; 100d) is allocated to the pressing-on element (32; 32c; 32d), which pre-stressing arrangement pre-stresses the pressing-on element (32; 32c; 32d) in the direction for removing the frictional engagement of the first formation of friction surfaces (22; 22c; 22d) with the second formation of friction surfaces (24; 24c; 24d).

12. Coupling arrangement according to Claim 8 or 9 and Claim 10 or 11,
**characterized in that** the pre-stressing arrangement (100; 100c; 100d) comprises the axially elastic coupling arrangement (34; 34c; 34d).

13. Coupling arrangement according to any one of Claims 10 to 12,
**characterized in that** the pre-stressing arrangement (100a; 100b) comprises a plate spring unit (102a; 102b) that axially pre-stresses the pressing-on element (32a; 32b) with respect to the housing (12a; 12b).

14. Coupling arrangement according to any one of Claims 1 to 15,
**characterized in that** the second formation of friction surfaces (24; 24a; 24b; 24c; 24d) is coupled to the output drive element (46; 46a; 46b; 46c; 46d) by way of a torsion vibration damping arrangement (44; 44a; 44b; 44c; 44d) in order to rotate about the rotational axis (A).

15. Coupling arrangement according to Claim 14,
**characterized in that** the torsion vibration damping arrangement (44; 44a; 44b; 44c; 44d) is arranged in the first chamber region (72; 72a; 72b; 72c; 72d).

16. Coupling arrangement according to Claim 14 or 15,
**characterized in that** the torsion vibration damping arrangement (44; 44a; 44b) radially overlaps the first formation of friction surfaces (22; 22a; 22b) or/and the second formation of friction surfaces (24; 24a; 24b) at least in regions.

17. Coupling arrangement according to any one of the preceding claims,
**characterized in that** a plurality of conveying elements (96; 96a; 96b; 96c; 96d) are provided one following the other in the circumferential direction.

18. Coupling arrangement according to any one of the preceding claims,
**characterized in that** at least one conveying element (96; 96a; 96b; 96c; 96d) comprises a radially and axially extended conveying surface (97; 97a; 97b; 97c; 97d) that can rotate with the housing (12; 12a; 12b; 12c; 12d) about the rotational axis (A).

19. Coupling arrangement according to Claim 8 and Claim 18,
**characterized in that** the conveying surface (97b; 97c; 97d) is provided at least in regions on the pressing-on element (32b; 32c; 32d).

20. Coupling arrangement according to Claim 8 and Claim 18 or 19,
**characterized in that** the second formation of friction surfaces (24; 24a; 24b) comprises a friction element (30; 30a; 30b) that is connected to the pressing-on element (32; 32a; 32b) and that the conveying surface (97; 97a; 97b) is provided at least in regions on the friction element (30; 30a; 30b) or/and on an intermediate element that connects the friction element (30; 30a; 30b) to the pressing-on element (32; 32a; 32b).

21. Coupling arrangement according to Claim 20,
**characterized in that** the conveying surface (97b) is provided on at least two elements of the pressing-on element(32b), friction element (30b) and, insofar as is provided, a connecting element.

22. Coupling arrangement according to any one of the preceding claims,
**characterized in that** at least one conveying element (96c') forms an integral component of the housing (12c) or/and is provided on a conveying organ that is fixed to the housing (12c).

23. Coupling arrangement according to any one of the preceding claims in conjunction with Claim 8,
**characterized in that** the conveying element (96; 96a; 96b; 96c; 96d)forms an integral component of the pressing-on element (32; 32a; 32b; 32c; 32d) or/and of a friction element (30; 30a; 30b; 30c; 30d) of the second formation of friction surfaces (24; 24a; 24b; 24c; 24d), which friction element is connected to the pressing-on element (32; 32a; 32b; 32c; 32d), or/and of the intermediate element that connects the friction element to the pressing-on element or/and is provided on a conveying organ that is fixedly connected thereto.

24. Coupling arrangement according to any one of the preceding claims,
**characterized in that** a fluid flow that is generated by means of the internal fluid circulation at a rotational speed of the housing (12; 12a; 12b; 12c; 12d) in the region of 2000 rpm and a rotational speed of the output drive element (46; 46a; 46b; 46c; 46d) in the region of 0 rpm is at least twice a fluid flow that is generated by means of the fluid supply system for the first chamber region (72; 72a; 72b; 72c; 72d)in and out of the first chamber region (72; 72a; 72b; 72c; 72d).

25. Coupling arrangement according to any one of Claims 1 to 24,
**characterized in that** the second formation of friction surfaces (24c; 24d) comprises a friction element (30c; 30d) that is connected to the pressing-on element (32c; 32d) and that the boundary of the second chamber region (74c; 74d) is defined by the pressing-on element (32c; 32d) and the friction element (30c; 30d) or/and a connecting element that connects the pressing-on element (32c; 32d) to the friction element (30c; 30d).

26. Coupling arrangement according to any one of Claims 1 to 25,
**characterized in that** at least one formation of friction surfaces (22, 24; 22a, 24a; 22b, 24b; 22c, 24c; 22d, 24d) from the first formation of friction surfaces (22; 22a; 22b; 22c; 22d) and from the second formation of friction surfaces (24; 24a; 24b; 24c; 24d), preferably the second formation of friction surfaces (24; 24a; 24b; 24c; 24d) comprises at least one axially elastic friction element (38; 38a; 38b; 38c; 38d), preferably having a wavy or/and plate-like shape.

27. Coupling arrangement according to any one of Claims 1 to 26,
**characterized in that** at least one formation of friction surfaces from the first formation of friction surfaces (22; 22a; 22b; 22c; 22d) and the second formation of friction surfaces (24; 24a; 24c; 24d) comprises at least one friction element (38; 38a; 38b; 38c; 38d) having at least one friction lining that provides a friction surface (40, 42; 40d, 28d) and that at least one orifice is provided in at least one friction lining for the through-passage of fluid.

28. Coupling arrangement according to any one of the preceding claims,
**characterized in that** the pressing-on element (32; 32a) comprises at least one orifice (88; 88a) for delivering fluid to the region of the formations of friction surfaces (22, 24; 22a, 24a).

29. Coupling arrangement according to any one of the preceding claims,
**characterized in that** at least one formation of friction surfaces from the first formation of friction surfaces (22; 22a; 22b; 22c; 22d) and the second formation of friction surfaces (24; 24a; 24b; 24c; 24d) comprises a plurality of friction elements (38; 38a).

30. Coupling arrangement according to any one of the preceding claims,
**characterized in that** the volume of the first chamber region (72c) is greater than the volume of the second chamber region (74c) and that in order to produce the frictional engagement of the formations of friction surfaces (22c, 24c) fluid can be delivered to the second chamber region (74c) by way of the second fluid flow path (80c).

31. Drive system for a vehicle comprising a drive assembly, an automatic transmission and a coupling arrangement (10; 10a; 10b; 10c; 10d) according to any one of the preceding claims in the torque transmission path between the drive assembly and the automatic transmission.

32. Drive system for a vehicle according to Claim 31 and Claim 10,
**characterized by** the fact that a coupling torque that can be generated by the pre-stressing effect of the pre-stressing arrangement (100a; 100b) is greater that a maximum drive torque of the drive assembly.

33. Drive system according to Claim 31 and Claim 10,
**characterized in that** a coupling torque that can be generated by the pre-stressing effect of the pre-stressing arrangement (100a; 100b) is smaller than a maximum drive torque of the drive assembly.

34. Drive system according to Claim 33 or Claim 31 in conjunction with Claim 11,
**characterized in that** in a driving state of the drive system a fluid differential pressure is set between the first chamber region (72; 72a; 72b; 72c; 72d) and the second chamber region (74; 74a; 74b; 74c; 74d) such that the coupling torque of the coupling arrangement (10; 10a; 10b; 10c; 10d) lies at a predetermined safety margin above the prevailing drive torque of the drive assembly.

35. Drive system according to Claim 34,
**characterized in that** the predetermined safety margin is in the region of 5% to 30%, preferably 10% to 20% of the prevailing drive torque of the drive assembly.

36. Drive system according to any one of Claims 31 to 35,
**characterized in that** a resilient element (102a; 102b) is provided, wherein the resilient element (102a; 102b) exerts on the pressing-on element (32a; 32b) a force that is sufficient to transmit at least one portion of a maximum engine torque.

## Revendications

1. Système d'embrayage, en particulier pour la chaîne cinématique d'un véhicule, comprenant :
un carter (12 ; 12a ; 12b ; 12c ; 12d) pouvant être rempli de liquide ;
une première formation de surface de frottement (22 ; 22a ; 22b ; 22c ; 22d) pouvant pivoter avec le carter (12 ; 12a ; 12b ; 12c ; 12d) autour d'un axe de rotation (A) ;
une deuxième formation de surface de frottement (24 ; 24a ; 24b ; 24c ; 24d) pouvant pivoter avec un élément d'entraînement en sortie (46 ; 46a ; 46b ; 46c ; 46d) autour de l'axe de rotation (A) ;
un élément d'appui (32 ; 32a ; 32b ; 32c ; 32d) pouvant pivoter avec le carter (12 ; 12a ; 12b ; 12c ; 12d) autour de l'axe de rotation (A) et divisant un espace intérieur (70 ; 70a ; 70b ; 70c ; 70d) du carter (12 ; 12a ; 12b ; 12c ; 12d) en une première région d'espace intérieur (72 ; 72a ; 72b ; 72c ; 72d) et en une deuxième région d'espace intérieur (74 ; 74a ; 74b ; 74c ; 74d), l'élément d'appui (32 ; 32a ; 32b ; 32c ; 32d) pouvant être déplacé par rapport au carter (12 ; 12a ; 12b ; 12c ; 12d) en fonction de la pression exercée par le liquide dans la première région d'espace intérieur (72 ; 72a ; 72b ; 72c ; 72d) et de la pression exercée par le liquide dans la deuxième région d'espace intérieur (74 ; 74a ; 74b ; 74c ; 74d) pour établir et relâcher un contact bloquant par frottement entre la première formation de surface de frottement (22 ; 22a ; 22b ; 22c ; 22d) et la deuxième formation de surface de frottement (24 ; 24a ; 24b ; 24c ; 24d) ;
un système d'alimentation en liquide prévu pour la première région d'espace intérieur (72 ; 72a ; 72b ; 72c ; 72d) et/ou la deuxième région d'espace intérieur (74 ; 74a ; 74b ; 74c ; 74d), comprenant au moins une première voie d'écoulement de liquide (76 ; 76a ; 76b ; 76c ; 76d) pour la première région d'espace intérieur (72 ; 72a ; 72b ; 72c ; 72d) et/ou au moins une deuxième voie d'écoulement de liquide (80 ; 80a ; 80b ; 80c ; 80d) pour la deuxième région d'espace intérieur (74 ; 74a ; 74b ; 74c ; 74d), le liquide pouvant être amené par le biais d'au moins une voie d'écoulement de liquide (76, 80 ; 76a, 80a ; 76b, 80b ; 76c, 80c ; 76d, 80d) de la région d'espace intérieur (72, 74 ; 72a, 74a ; 72b, 74b ; 72c, 74c ; 72d, 74d) associée et pouvant être évacué par le biais d'au moins une voie d'écoulement de liquide (76, 80 ; 76a, 80a ; 76b, 80b ; 76c, 80c ; 76d, 80d) de la région d'espace intérieur (72, 74 ; 72a, 74a ; 72b, 74b ; 72c, 74c ; 72d, 74d) associée ;
**caractérisé en ce qu'**il comporte au moins un élément de transport (96 ; 96a ; 96b ; 96c ; 96d) permettant de réaliser une circulation interne de liquide en présence de formations de surface de frottement (22, 24 ; 22a, 24a ; 22b, 24b ; 22c, 24c ; 22d, 24d) placées les unes avec les autres en contact bloquant par frottement.

2. Système d'embrayage selon la revendication 1, **caractérisé en ce que** le système d'alimentation en liquide est du type à deux conduites avec respectivement une voie d'écoulement de liquide pour la première région d'espace intérieur (72 ; 72a ; 72b ; 72c ; 72d) et la deuxième région d'espace intérieur (74 ; 74a ; 74b ; 74c ; 74d).

3. Système d'embrayage selon la revendication 1 ou 2, **caractérisé en ce qu'**au moins une ouverture de passage (88 ; 88a ; 88b ; 88c) est prévue dans l'élément de compression (32 ; 32a ; 32b ; 32c) pour l'échange de liquide entre la première région d'espace intérieur (72 ; 72a ; 72b ; 72c) et la deuxième région d'espace intérieur (74 ; 74a ; 74b ; 74c).

4. Système d'embrayage selon la revendication 1, **caractérisé en ce que** le système d'alimentation en liquide est du type à trois conduites avec une voie d'écoulement de liquide (80c) pour la deuxième région d'espace intérieur et deux voies d'écoulement de liquide pour la première région d'espace intérieur (72c).

5. Système d'embrayage selon la revendication 1, **caractérisé en ce que** le système d'alimentation en liquide est du type à une conduite avec une voie d'écoulement de liquide (80c) pour la deuxième région d'espace intérieur (74c).

6. Système d'embrayage selon la revendication 1, **caractérisé en ce que** le système d'alimentation en liquide est du type à deux conduites élargies avec une voie d'écoulement de liquide (80c) pour la deuxième région d'espace intérieur (74c) et une voie d'amenée de liquide (112c) et une voie d'évacuation de liquide (76c) pour la première région d'espace intérieur (72c).

7. Système d'embrayage selon l'une quelconque des revendications 1 à 6, **caractérisé en ce qu'**au moins la deuxième formation de surface de frottement (24 ; 24a ; 24b ; 24c ; 24d) est disposée dans la première région d'espace intérieur (72 ; 72a ; 72b ; 72c ; 72d).

8. Système d'embrayage selon l'une quelconque des revendications 1 à 7, **caractérisé en ce que** l'élément de compression (32 ; 32a ; 32b ; 32c ; 32d) est couplé au carter (12 ; 12a ; 12b ; 12c ; 12d) pour pouvoir pivoter autour de l'axe de rotation (A) par le biais d'un agencement de couplage (34 ; 34a ; 34b ; 34c ; 34d) élastique dans le plan axial.

9. Système d'embrayage selon la revendication 8, **caractérisé en ce que** les agencements de couplage (34 ; 34a ; 34b ; 34c ; 34d) comprennent une pluralité de ressorts à lame (36 ; 36a ; 36b ; 36c ; 36d).

10. Système d'embrayage selon l'une quelconque des revendications 1 à 9, **caractérisé en ce qu'**un agencement de précontrainte (100a ; 100b) est associé à l'élément de compression (32a ; 32b), ledit agencement précontraignant l'élément de compression (32a ; 32b) en direction de l'établissement d'un contact bloquant par frottement de la première formation de surface de frottement (22a ; 22b) avec la deuxième formation de surface de frottement (24a ; 24b).

11. Système d'embrayage selon l'une quelconque des revendications 1 à 10, **caractérisé en ce qu'**un agencement de précontrainte (100 ; 100c ; 100d) est associé à l'élément de compression (32 ; 32c ; 32d), ledit agencement précontraignant l'élément de compression (32 ; 32c ; 32d) en direction de ma suppression du contact bloquant par frottement de la première formation de surface de frottement (22 ; 22c ; 22d) avec la deuxième formation de surface de frottement (24 ; 24c ; 24d).

12. Système d'embrayage selon la revendication 8 ou 9 et la revendication 10 ou 11, **caractérisé en ce que** l'agencement de précontrainte (100 ; 100c ; 100d) comprend l'agencement de couplage (34 ; 34c ; 34d) élastique dans le plan axial.

13. Système d'embrayage selon l'une quelconque des revendications 10 à 12, **caractérisé en ce que** l'agencement de précontrainte (100a ; 100b) comprend une unité de ressort Belleville (102a ; 102b) précontraignant l'élément de compression (32a ; 32b) dans le plan axial par rapport au carter (12a ; 12b).

14. Système d'embrayage selon l'une quelconque des revendications 1 à 15, **caractérisé en ce que** la deuxième formation de surface de frottement (24 ; 24a ; 24b ; 24c ; 24d) est couplée à l'élément d'entraînement en sortie (46 ; 46a ; 46b ; 46c ; 46d) par le biais d'un agencement d'amortisseur de vibrations torsionnelles (44 ; 44a ; 44b ; 44c ; 44d) en vue de pivoter autour de l'axe de rotation (A).

15. Système d'embrayage selon la revendication 14, **caractérisé en ce que** l'agencement d'amortisseur de vibrations torsionnelles (44 ; 44a ; 44b ; 44c ; 44d) est disposé dans la première région d'espace intérieur (72 ; 72a ; 72b ; 72c ; 72d).

16. Système d'embrayage selon la revendication 14 ou 15, **caractérisé en ce que** l'agencement d'amortisseur de vibrations torsionnelles (44 ; 44a ; 44b) chevauche au moins en partie dans le plan radial la première formation de surface de frottement (22 ; 22a ; 22b) et/ou la deuxième formation de surface de frottement (24 ; 24a ; 24b).

17. Système d'embrayage selon l'une quelconque des revendications précédentes, **caractérisé en ce qu'**une pluralité d'éléments d'extraction (96 ; 96a ; 96b ; 96c ; 96d) successifs sont prévus dans la direction périphérique.

18. Système d'embrayage selon l'une quelconque des revendications précédentes, **caractérisé en ce qu'**au moins un élément de transport (96 ; 96a ; 96b ; 96c ; 96d) comprend une surface de transport (97 ; 97a ; 97b ; 97c ; 97d) s'élargissant dans le plan radial et dans le plan axial et pouvant pivoter avec le carter (12 ; 12a, 12b ; 12c ; 12d) autour de l'axe de rotation (A).

19. Système d'embrayage selon la revendication 8 et la revendication 18, **caractérisé en ce que** la surface de transport (97b ; 97c ; 97d) est prévue au moins en partie au niveau de l'élément de compression (32b ; 32c ; 32d).

20. Système d'embrayage selon la revendication 8 et la revendication 18 ou 19, **caractérisé en ce que** la deuxième formation de surface de frottement (24 ; 24a ; 24b) comprend un élément de frottement (30 ; 30a ; 30b) relié à l'élément de compression (32 ; 32a ; 32b) et que la surface de transport (97 ; 97a ; 97b) est prévue au moins en partie au niveau de l'élément de frottement (30 ; 30a ; 30b) et/ou d'un élément intermédiaire reliant l'élément de frottement (30 ; 30a ; 30b) à l'élément de compression (32 ; 32a ; 32b).

21. Système d'embrayage selon la revendication 20, **caractérisé en ce que** la surface de transport (97b) est prévue au niveau d'au moins deux éléments parmi l'élément de compression (32b), l'élément de frottement (30b) et, s'il existe, l'élément de liaison.

22. Système d'embrayage selon l'une quelconque des revendications précédentes, **caractérisé en ce qu'**au moins un élément de transport (96c') fait partie intégrante du carter (12c) et/ou est prévu au niveau d'un organe de transport fixé au carter (12c).

23. Système d'embrayage selon l'une quelconque des revendications précédentes en association avec la revendication 8, **caractérisé en ce que** l'élément de transport (96 ; 96a ; 96b ; 96c ; 96d) fait partie intégrante de l'élément de compression (32 ; 32a ; 32b ; 32c ; 32d) et/ou d'un élément de frottement (30 ; 30a ; 30b ; 30c ; 30d) de la deuxième formation de surface de frottement (24 ; 24a ; 24b ; 24c ; 24d) relié à l'élément de compression (32 ; 32a ; 32b ; 32c ; 32d) et/ou d'un élément intermédiaire reliant l'élément de frottement à l'élément de compression et/ou est prévu au niveau d'un organe de transport y étant relié fixement.

24. Système d'embrayage selon l'une quelconque des revendications précédentes, **caractérisé en ce qu'**un flux de liquide produit par la circulation interne de liquide représente, pour une vitesse de rotation du carter (12 ; 12a ; 12b ; 12c ; 12d) se situant dans la plage de 2000 Tr/min et pour une vitesse de rotation de l'élément d'entraînement en sortie (46 ; 46a ; 46b ; 46c ; 46d) se situant dans la plage de 0 Tr/min, au moins le double d'un flux de liquide produit par le système d'alimentation en liquide pour la première région d'espace intérieur (72 ; 72a ; 72b ; 72c ; 72d), à l'entrée et à la sortie de la première région d'espace intérieur (72 ; 72a ; 72b ; 72c ; 72d).

25. Système d'embrayage selon l'une quelconque des revendications 1 à 24, **caractérisé en ce que** la deuxième formation de surface de frottement (24c ; 24d) comprend un élément de frottement (30c ; 30d) relié à l'élément de compression (32c ; 32d) et que la deuxième région d'espace intérieur (74c ; 74d) est délimitée par l'élément de compression (32c ; 32d) et l'élément de frottement (30c ; 30d) et/ou un élément de liaison reliant l'élément de compression (32c ; 32d) à l'élément de frottement (30c ; 30d).

26. Système d'embrayage selon l'une quelconque des revendications 1 à 25, **caractérisé en ce qu'**au moins une formation de surface de frottement (22, 24 ; 22a, 24a ; 22b, 24b ; 22c, 24c ; 22d, 24d) de la première formation de surface de frottement (22 ; 22a ; 22b ; 22c ; 22d) et de la deuxième formation de surface de frottement (24 ; 24a ; 24b ; 24c ; 24d), de préférence de la deuxième formation de surface de frottement (24 ; 24a ; 24b ; 24c ; 24d), comprend au moins un élément de frottement (38 ; 38a ; 38b ; 38c ; 38d) élastique dans le plan axial, de préférence de forme ondulée et/ou et/ou à plateau.

27. Système d'embrayage selon l'une quelconque des revendications 1 à 26, **caractérisé en ce qu'**au moins une formation de surface de frottement de la première formation de surface de frottement (22 ; 22a ; 22b ; 22c ; 22d) et de la deuxième formation de surface de frottement (24 ; 24a ; 24c ; 24d) comporte au moins un élément de frottement (38 ; 38a ; 38b ; 38c ; 38d) doté d'au moins une garniture de frottement réalisant une surface de frottement (40, 42 ; 40d, 28d) et qu'au moins une ouverture est prévue pour le passage de liquide dans au moins une garniture de frottement.

28. Système d'embrayage selon l'une quelconque des revendications précédentes, **caractérisé en ce que** l'élément de compression (32 ; 32a) comporte au moins une ouverture (88 ; 88a) permettant d'amener du liquide dans la région des formations de surface de frottement (22, 24 ; 22a, 24a).

29. Système d'embrayage selon l'une quelconque des revendications précédentes, **caractérisé en ce qu'**au moins une formation de surface de frottement de la première formation de surface de frottement (22 ; 22a ; 22b ; 22c ; 22d) et de la deuxième formation de surface de frottement (24 ; 24a ; 24b ; 24c ; 24d) comprend une pluralité d'éléments de frottement (38 ; 38a).

30. Système d'embrayage selon l'une quelconque des revendications précédentes, **caractérisé en ce que** le volume de la première région d'espace intérieur (72c) est supérieur au volume de la deuxième région d'espace intérieur (74c) et que du liquide peut être amené à la deuxième région d'espace intérieur (74c) par le biais de la deuxième voie d'écoulement de liquide (80c) pour établir le contact bloquant par frottement des formations de surface de frottement (22c, 24c).

31. Système d'entraînement pour un véhicule, comprenant un groupe motopropulseur, une boîte de vitesses automatique et un système d'embrayage (10 ; 10a ; 10b ; 10c ; 10d) selon l'une quelconque des revendications précédentes se trouvant dans la voie de transmission de couple de rotation placée entre le groupe motopropulseur et la boîte de vitesses automatique.

32. Système d'entraînement pour un véhicule selon la revendication 31 et la revendication 10, **caractérisé en ce qu'**un couple d'embrayage pouvant être généré par l'effet de précontrainte de l'agencement de précontrainte (100a ; 100b) est supérieur à un couple de rotation d'entraînement maximal du groupe motopropulseur.

33. Système d'entraînement selon la revendication 31 et la revendication 10, **caractérisé en ce qu'**un couple d'embrayage pouvant être généré par l'effet de précontrainte de l'agencement de précontrainte (100a ; 100b) est inférieur à un couple de rotation d'entraînement maximal du groupe motopropulseur.

34. Système d'entraînement selon la revendication 33 ou la revendication 31 associée à la revendication 11, **caractérisé en ce que** dans un état de conduite du système d'entraînement en entrée, une pression différentielle exercée par le liquide est réglée de telle sorte entre la première région d'espace intérieur (72 ; 72a ; 72b ; 72c ; 72d) et la deuxième région d'espace intérieur (74 ; 74a ; 74b ; 74c ; 74d) que le couple d'embrayage du système d'embrayage (10 ; 10a ; 10b ; 10c ; 10d) se positionne à un certain écart de sécurité prédéfini au-dessus du couple de rotation d'entraînement actuel du groupe motopropulseur.

35. Système d'entraînement selon la revendication 34, **caractérisé en ce que** l'écart de sécurité prédéfini se situe dans la plage de 5 % à 30 %, de préférence de 10 % à 20 %, du couple de rotation d'entraînement actuel du groupe motopropulseur.

36. Système d'entraînement selon l'une quelconque des revendications 31 à 35, **caractérisé en ce qu'**un élément de ressort (102a ; 102b) est prévu, l'élément de ressort (102a ; 102b) exerçant sur l'élément de compression (32a ; 32b) une force suffisante pour transmettre au moins une partie d'un couple de rotation du moteur maximal.
